# EUROPEAN PATENT APPLICATION

(11) **EP 4 681 963 A1**
(43) Date of publication of application: **21.01.2026**
(21) Application number: 24774802.3
(22) Date of filing: 13.03.2024
(51) Int. Cl.: B60K 35/28, B60K 35/29

(54) **INFORMATION DISPLAY SYSTEM, WORK VEHICLE, DISPLAY METHOD, AND COMPUTER PROGRAM**

(30) Priority: 17.03.2023 JP 2023042625
(71) Applicant: Kubota Corporation, Osaka 556-8601 (JP)
(72) Inventor: FUJIWARA, Takashi, Sakai-shi, Osaka 590-0908 (JP); GONO, Tsuyoshi, Sakai-shi, Osaka 590-0908 (JP); OHARA, Shinji, Sakai-shi, Osaka 590-0908 (JP); HORAI, Kohei, Sakai-shi, Osaka 590-0908 (JP)
(74) Representative: Cabinet Beau de Loménie
(86) International application number: PCT/JP2024/009847
(87) International publication number: WO 2024/195664

(57) **Abstract**

An information display system for a work vehicle includes a meter panel unit including a display element and a control device configured to control the meter panel unit. When a user operates a DPF regeneration switch that receives an instruction to execute DPF regeneration of the work vehicle, if the work vehicle does not satisfy conditions necessary for execution of the DPF regeneration, the control device causes the display element to display information relating to operations to be performed by the user for the work vehicle to satisfy the conditions.

## Description

### TECHNICAL FIELD

The present disclosure relates to information display systems, work vehicles, display methods, and computer programs.

### BACKGROUND ART

Research and development of smart agriculture that uses information and communication technology (ICT) and the Internet of things (IoT), as the next-generation agriculture, is under way. Automated and unmanned operations of agricultural work vehicles such as tractors used in fields have been studied and developed. For example, work vehicles that travel while performing automatic steering, using a positioning system such as a global navigation satellite system (GNSS) that can perform precise positioning, have been put into practice.

A meter panel unit that displays and notifies an operator of a travel speed, the load state of an engine, and the state of each portion of a work vehicle is provided in front of the operator's seat of an agricultural work vehicle such as a tractor.

Patent Document 1 describes a commonly used meter unit for passenger cars.

### CITATION LIST

### PATENT LITERATURE

Patent Document No. 1: Japanese Laid-Open Patent Publication No. 2012-32209

### SUMMARY OF INVENTION

### TECHNICAL PROBLEM

A meter panel provided in an agricultural machine such as a tractor is required to accurately notify the operator of various kinds of information about the vehicle when the vehicle is traveling or working. In addition, it is necessary to display more kinds of information in order to allow such an agricultural machine to perform various kinds of works outdoors compared to general passenger cars. In the case in which an agricultural machine is used in smart agriculture, even more kinds of information need to be displayed. However, as the amount of information displayed on the meter panel increases, visibility decreases, and therefore, it is more difficult for the operator to obtain necessary information.

There is an increased demand for such a meter panel not only for agricultural machines but also for construction machines that are used in work in construction sites. Agricultural machines and construction machines that can travel are hereinafter collectively referred to as "work vehicles".

It is required to facilitate operation of work vehicles based on information displayed on meter panels of the work vehicles.

### SOLUTION TO PROBLEM

The present disclosure provides solutions described in the following aspects.

### [Item 1]

An information display system for a work vehicle, comprising:
a meter panel unit including a display element; and
a control device configured to control the meter panel unit,
wherein when a user operates a DPF regeneration switch that receives an instruction to execute DPF (Diesel Particulate Filter) regeneration of the work vehicle, if the work vehicle does not satisfy conditions necessary for execution of the DPF regeneration, the control device causes the display element to display information relating to operations to be performed by the user for the work vehicle to satisfy the conditions.

### [Item 2]

The information display system of Item 1, wherein the information relating to the operations to be performed by the user displayed by the display element includes text indicating the operations to be performed by the user.

### [Item 3]

The information display system of Item 1 or 2, wherein when there are multiple types of operations to be performed by the user for the work vehicle to satisfy the conditions, the control device sequentially switches contents of the multiple types of operations to be performed by the user and causes the display element to display the contents.

### [Item 4]

The information display system of Item 3, wherein the control device causes the display element to display information relating to operations to be performed by the user on an operation device that receives operations from the user relating to travel of the work vehicle with higher priority than information relating to operations to be performed by the user on a device different from the operation device.

### [Item 5]

The information display system of Item 3 or 4, wherein the control device does not cause the display element to display information relating to operations already executed by the user among the multiple types of operations to be performed by the user.

### [Item 6]

The information display system of any one of Items 1 to 5, wherein when the work vehicle comes to satisfy the conditions, the control device does not cause the display element to display the information relating to the operations to be performed by the user.

### [Item 7]

The information display system of Item 1, wherein when the user operates the DPF regeneration switch and the work vehicle satisfies the conditions, the control device does not cause the display element to display the information relating to the operations to be performed by the user.

### [Item 8]

A work vehicle comprising the information display system of any one of Items 1 to 7.

### [Item 9]

The work vehicle of Item 8, wherein when the user operates the DPF regeneration switch and the work vehicle satisfies the conditions necessary for execution of the DPF regeneration, the control device causes the work vehicle to execute DPF regeneration.

### [Item 10]

The work vehicle of Item 8 or 9, wherein when the user operates the DPF regeneration switch and the work vehicle does not satisfy the conditions necessary for execution of the DPF regeneration, the control device does not cause the work vehicle to execute DPF regeneration.

### [Item 11]

The work vehicle of Item 10, wherein when the work vehicle comes to satisfy the conditions, the control device causes the work vehicle to execute DPF regeneration.

### [Item 12]

The work vehicle of any one of Items 8 to 11, wherein the work vehicle is a tractor.

### [Item 13]

A computer-implemented display method for causing a display element of a meter panel unit for a work vehicle to display an image, comprising:
when a user operates a DPF (Diesel Particulate Filter) regeneration switch that receives an instruction to execute DPF regeneration of the work vehicle, if the work vehicle does not satisfy conditions necessary for execution of the DPF regeneration, causing the display element to display information relating to operations to be performed by the user for the work vehicle to satisfy the conditions.

### [Item 14]

A computer program executed by a computer to cause a display element of a meter panel unit for a work vehicle to display an image, the computer program causing the computer to perform:
when a user operates a DPF (Diesel Particulate Filter) regeneration switch that receives an instruction to execute DPF regeneration of the work vehicle, if the work vehicle does not satisfy conditions necessary for execution of the DPF regeneration, causing the display element to display information relating to operations to be performed by the user for the work vehicle to satisfy the conditions.

General or specific aspects of the present disclosure may be implemented using a device, system, method, integrated circuit, computer program, non-transitory computer-readable storage medium, or any combination thereof. The computer-readable storage medium may be inclusive of volatile and non-volatile storage media. A device may include a plurality of devices. In the case in which a device includes two or more devices, the two or more devices may be provided in a single apparatus, or separately arranged in two or more different apparatuses.

### ADVANTAGEOUS EFFECTS OF INVENTION

When DPF regeneration is not executed when the user operates the DPF regeneration switch, the user may be confused without knowing the reason why DPF regeneration is not executed. According to an embodiment of the present disclosure, when the work vehicle does not satisfy conditions necessary for execution of DPF regeneration, the control device causes the display element to display information relating to operations to be performed by the user for the work vehicle to satisfy the conditions. By viewing the display content of the display element, the user can know operations necessary to execute DPF regeneration.

### BRIEF DESCRIPTION OF DRAWINGS

[FIG. 1A] FIG. 1A is a side view schematically illustrating an example work vehicle according to an embodiment of the present disclosure.
[FIG. 1B] FIG. 1B is a front view schematically illustrating a meter panel unit when attached behind a steering wheel positioned in front of an operator's seat of a work vehicle, in an embodiment of the present disclosure.
[FIG. 2] FIG. 2 is a front view illustrating an example arrangement of main components of the meter panel unit of this embodiment.
[FIG. 3] FIG. 3 is a perspective view illustrating an example configuration of a wall surface portion of the meter panel unit of this embodiment.
[FIG. 4] FIG. 4 is a perspective view illustrating an example configuration of a transparent cover of the meter panel unit of this embodiment.
[FIG. 5] FIG. 5 is a front view illustrating an example arrangement of indicators of the meter panel unit of this embodiment.
[FIG. 6] FIG. 6 is a front view illustrating an example state in which various kinds of information are displayed on a display element of the meter panel unit of this embodiment.
[FIG. 7] FIG. 7 is a perspective view of an analog meter in the meter panel unit of this embodiment.
[FIG. 8] FIG. 8 is a front view illustrating a positional relationship between a first analog meter, an arc-shaped indicator, and a facing plate.
[FIG. 9] FIG. 9 is a front view illustrating an example configuration of an arc-shaped indicator.
[FIG. 10] FIG. 10 is a front view illustrating a second analog meter and a second arc-shaped indicator.
[FIG. 11] FIG. 11 is a block diagram schematically illustrating an example configuration of an information display system in an embodiment of the present disclosure.
[FIG. 12] FIG. 12 is a block diagram illustrating an example hardware configuration of a control device.
[FIG. 13] FIG. 13 is a front view schematically illustrating an example in which an arc having the same color as that of light emitted from a light emitting region of an arc-shaped indicator is displayed.
[FIG. 14] FIG. 14 is a front view schematically illustrating an example in which an arc having the same color as that of light emitted from a light emitting region of an arc-shaped indicator, and a second object having another shape and having an arc having the same color, are displayed.
[FIG. 15] FIG. 15 is a diagram illustrating an example of a home screen.
[FIG. 16] FIG. 16 is a diagram schematically illustrating an example of segmentation of a display region.
[FIG. 17] FIG. 17 is a block diagram illustrating some components of the work vehicle.
[FIG. 18] FIG. 18 is a diagram illustrating an example of a display element displaying information prompting a user to perform DPF regeneration.
[FIG. 19] FIG. 19 is a flowchart illustrating an example of operations relating to DPF regeneration.
[FIG. 20] FIG. 20 is a diagram illustrating an example of a display element displaying information relating to operations to be performed by a user for the work vehicle to satisfy conditions.
[FIG. 21] FIG. 21 is a diagram illustrating an example of a display element displaying information relating to operations to be performed by a user for the work vehicle to satisfy conditions.
[FIG. 22] FIG. 22 is a flowchart illustrating an example of operations relating to DPF regeneration.
[FIG. 23] FIG. 23 is a flowchart illustrating an example of operations relating to DPF regeneration.
[FIG. 24] FIG. 24 is a flowchart illustrating an example of operations relating to DPF regeneration.
[FIG. 25] FIG. 25 is a flowchart illustrating an example of operations relating to DPF regeneration.
[FIG. 26] FIG. 26 is a flowchart illustrating an example of operations relating to DPF regeneration.
[FIG. 27] FIG. 27 is a diagram illustrating an example of a display element displaying information relating to operations to be performed by a user for the work vehicle to satisfy conditions.
[FIG. 28] FIG. 28 is a diagram illustrating an example of a display element displaying information relating to operations to be performed by a user for the work vehicle to satisfy conditions.
[FIG. 29] FIG. 29 is a diagram illustrating an example of a display element displaying information relating to operations to be performed by a user for the work vehicle to satisfy conditions.

### DESCRIPTION OF EMBODIMENTS

Meter panel units according to embodiments of the present disclosure will be described below with reference to the accompanying drawings. It should be noted that like reference signs refer to like parts throughout the several views.

The embodiments described below are exemplified to embody technical ideas of the present invention, and the present invention is not limited to the following. Furthermore, the descriptions of sizes, materials, shapes, relative arrangements, and the like of components are not intended to limit the scope of the present invention thereto but intended to be illustrative. The size and positional relationship of members illustrated in the drawings may be exaggerated to facilitate understanding.

As used herein, the term "parallel" with respect to two straight lines, sides, surfaces, or the like is intended to encompass some angular deviations from absolute parallelism between the two straight lines, sides, surfaces, or the like that are in the range of 0 to 5° unless otherwise specified. As used herein, the term "perpendicular" or "orthogonal" with respect to two straight lines, sides, surfaces, or the like is intended to encompass some angular deviations from absolute perpendicularity or orthogonality (90°) between the two straight lines, sides, surfaces, or the like that are in the range of ±5° unless otherwise specified. The angle between two straight lines, sides, surfaces, or the like has a positive value, but not a negative value, unless otherwise specified.

### <Overall configuration of work vehicle>

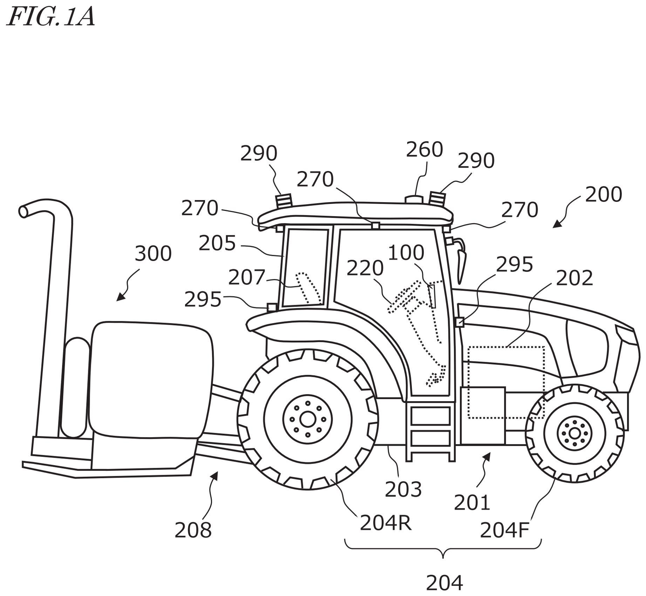

FIG. 1A is a side view schematically illustrating an example work vehicle 200 according to this embodiment. The illustrated work vehicle 200 is a tractor that tows an implement (replaceable work equipment) 300.

The work vehicle 200 of FIG. 1A includes a vehicle body 201, a prime mover (engine) 202, and a transmission 203. The vehicle body 201 is provided with a travel device including tire-mounted wheels 204, and a cabin 205. The travel device includes four wheels 204, axles for rotating the four wheels, and brakes for slowing or stopping the axles. The wheels 204 of this example include a pair of front wheels 204F and a pair of rear wheels 204R. One or both of the front wheel 204F and the rear wheel 204R may be replaced by a plurality of wheels to which a continuous track is attached (crawler) instead of a tire-mounted wheel.

In the cabin 205, a meter panel unit 100 according to an embodiment of the present disclosure, an operator's seat 207, a steering wheel 220, and switches for operations are provided.

The work vehicle 200 of FIG. 1A is provided with a plurality of external sensors to sense surroundings of the work vehicle 200. The external sensors may include various kinds of sensors such as a plurality of cameras 270, a plurality of obstacle sensors 295, and a plurality of LiDAR sensors 290. The cameras 270 may, for example, be provided on the front, rear, left, and right sides of the work vehicle 200. Each camera 270 captures an image of an environment around the work vehicle 200, and generates image data. Images obtained by the cameras 270 may, for example, be transmitted to a terminal device for remote monitoring. The cameras 270 are optionally provided, and the number thereof is not particularly limited. The LiDAR sensor 290 is an example external sensor to output sensor data indicating a distribution of objects present in an environment around the work vehicle 200. In the example of FIG. 1A, two LiDAR sensors 290 are provided at an upper front portion and an upper rear portion of the cabin 205. The LiDAR sensors 290 may be provided at other positions (e.g., a lower portion of a front surface of the vehicle body 201). Each LiDAR sensor 290 repeatedly outputs sensor data indicating distances to and directions of measurement points of objects existing in a surrounding environment, or the three-dimensional coordinate values of the measurement points, while the work vehicle 200 is traveling. The number of LiDAR sensors 290 is not limited to two and may be one or at least three. In the example of FIG. 1A, the plurality of obstacle sensors 295 are provided at a front portion and a rear portion of the cabin 205. The obstacle sensors 295 may be positioned at other positions. The obstacle sensors 295 may include a laser scanner or ultrasonic sonar, for example.

The work vehicle 200 further includes a GNSS unit 260. GNSS collectively refers to satellite-based positioning systems, such as the global positioning system (GPS), the quasi-zenith satellite system (QZSS, for example, Michibiki), GLONASS, Galileo, and BeiDou. The GNSS unit 260 receives satellite signals transmitted from a plurality of GNSS satellites (also referred to as GNSS signals), and performs positioning based on the satellite signals. The GNSS unit 260 is provided at an upper portion of the cabin 205, but the GNSS unit 260 may be provided at other positions.

The engine 202 may, for example, be a diesel engine. An electric motor may be used instead of a diesel engine. The transmission 203 is capable of changing the propelling force and movement speed of the work vehicle 200 by changing gear ratios. The transmission 203 is also capable of allowing the work vehicle 200 to switch between forward movement and rearward movement.

A connecting device 208 is provided at a rear portion of the vehicle body 201. The connecting device 208 includes, for example, a three-point support device (also referred to as a "three-point linkage" or "three-point hitch"), a power take-off (PTO) shaft, a universal joint, and a communication cable. The connecting device 208 can be used to removably connect an implement 300 to the work vehicle 200. The connecting device 208 can change the position or orientation of the implement 300 by raising or lowering the three-point linkage using, for example, a hydraulic device. In addition, power can be transmitted from the work vehicle 200 to the implement 300 through the universal joint. While towing the implement 300, the work vehicle 200 allows the implement 300 to perform predetermined work. A connecting device may also be provided at a front portion of the vehicle body 201. In that case, an implement can be connected in front of the work vehicle 200.

Although the implement 300 of FIG. 1A is, for example, a sprayer for spraying a chemical agent to crops, the implement 300 is not limited to sprayers. For example, any kind of implement 300 such as a mower, seeder, spreader, rake, baler, harvester, plough, harrow, or rotary tiller may be connected to the work vehicle 200 for use.

Thus, the work vehicle 200, which is used in smart agriculture, is equipped with various sensors, and performs various kinds of work together with the implement 300. During such work, it is necessary to give the operator (user or operator) various kinds of information about a travel state and a work state. Therefore, information that should be displayed on the meter panel unit 100 may significantly vary depending on the kind and phase of work.

It should be noted that the work vehicle 200, such as a tractor, may be configured to travel by manual driving, automatic steering, or automatic driving.

### <Overall configuration of meter panel unit>

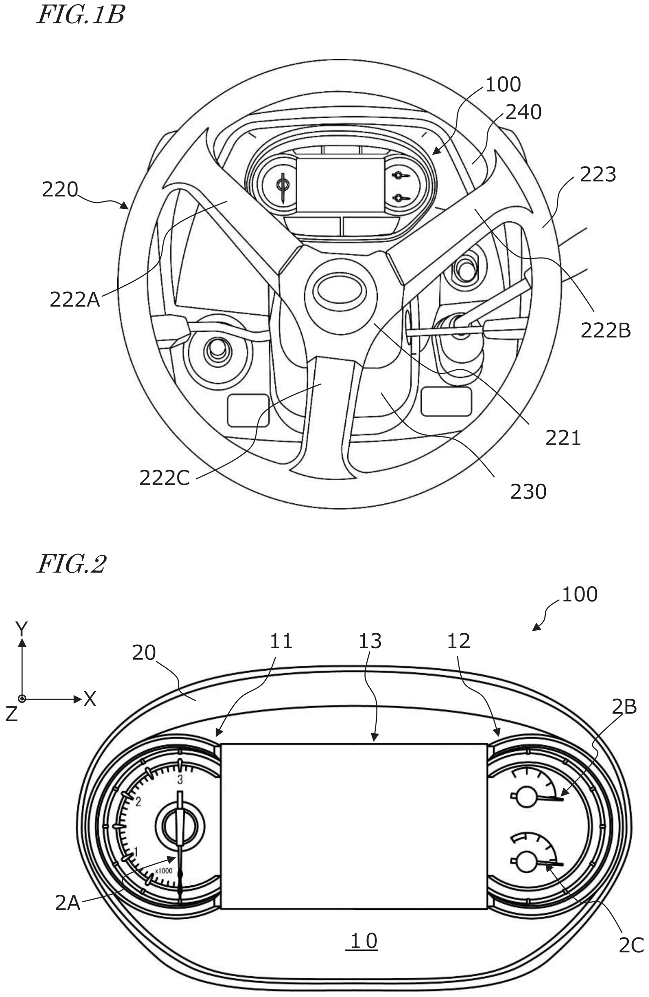

FIG. 1B is a front view schematically illustrating the meter panel unit 100 when the meter panel unit 100 is attached to a tractor, which is an example work vehicle, in an embodiment of the present disclosure. In the example illustrated in FIG. 1B, the meter panel unit 100 is positioned on the front side of the operator's seat of the tractor. Specifically, the meter panel unit 100 is positioned above a steering column (steering wheel stay) 230 that supports the steering wheel 220 in a manner that allows the steering wheel 220 to rotate, and is fitted into an opening of a meter cover 240. In this example, the steering wheel 220 has a central hub (horn cover) 221, three spokes 222A, 222B, and 222C radially extending from the horn cover 221, and a rim 223 supported by the spokes 222A, 222B, and 222C. The meter panel unit 100 is provided at a position that allows the operator sitting on the operator's seat to see the meter panel unit 100. In the example of FIG. 1B, various kinds of information displayed on the meter panel unit 100 can be seen through an opening between the spokes 222A and 222B.

The meter panel unit 100 is required to have excellent visibility. In particular, in the case of movable work vehicles capable of performing automatic steering or automatic driving, various kinds of information that are not displayed on general passenger cars need to be displayed during various kinds of agricultural work. For the meter panel unit 100, having such a feature, the visibility is preferably improved so as to avoid overlooking more important information of various kinds of information. In addition, in the case in which the meter panel unit 100 is mounted on various work vehicles, it is desirable that the meter panel unit 100 have a structure that allows easy attachment. As described below, the meter panel unit 100 of this embodiment has excellent visibility and is easy to attach.

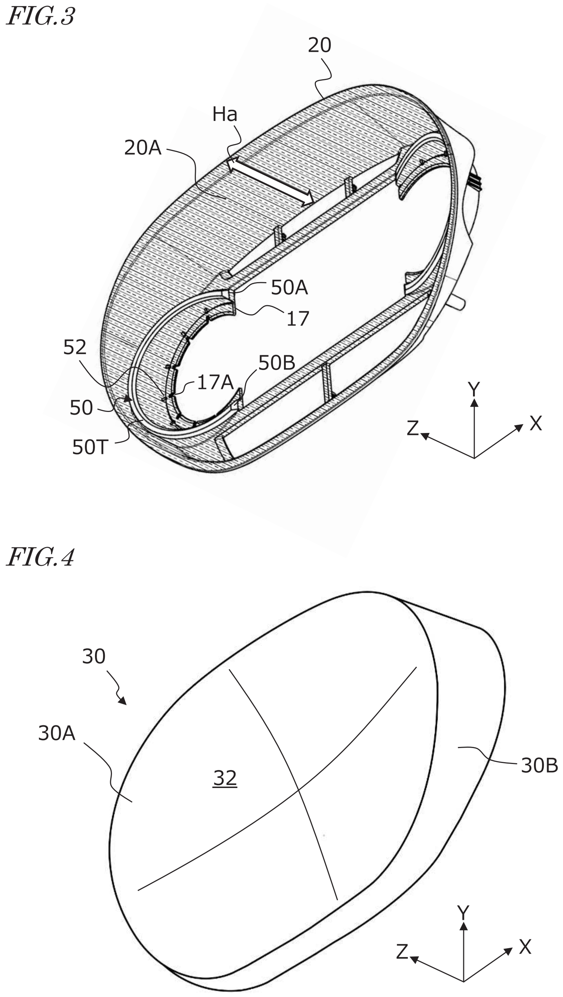

An overall configuration of the meter panel unit 100 will be described below with reference to FIGS. 2, 3, and 4. FIG. 2 is a front view illustrating an example arrangement of main components of the meter panel unit 100 of this embodiment. FIG. 3 is a perspective view illustrating an example configuration of a wall surface portion described below of the meter panel unit 100. FIG. 4 is a perspective view illustrating an example configuration of a transparent cover described below of the meter panel unit 100. These drawings illustrate an X-axis, a Y-axis, and a Z-axis that are orthogonal to one another for reference (right-handed coordinate system). In the present description, the positive direction of the Y axis is also referred to as "upward", and the negative direction thereof is also referred to as "downward". The positive direction of the X axis is also referred to as "rightward", and the negative direction thereof is also referred to as "leftward". The positive direction of the Z axis is also referred to as "forward", and the negative direction thereof is also referred to as "backward".

As illustrated in FIG. 2, the meter panel unit 100 includes a meter portion 10 including a first analog meter 11, a second analog meter 12, and a display element 13 provided between the first and second analog meters 11 and 12. In the present description, a portion of the meter portion 10 of FIG. 2 that displays information is also referred to as a display surface side of the meter portion 10.

The first analog meter 11 includes a pointer 2A, and the second analog meter 12 has pointers 2B and 2C. The pointer 2A is supported in a manner that allows the pointer 2A to revolve around the axis of rotation positioned near the center of the first analog meter 11. The pointer 2A indicates the engine speed by the direction in which the tip of the pointer 2A is oriented, for example. Here, "engine speed" means the number of revolutions of the engine per unit time (for example, one minute). The pointers 2B and 2C are supported in a manner that allows the pointers 2B and 2C to revolve around the respective axes of rotation located at different positions of the second analog meter 12. The pointer 2B indicates the remaining amount of fuel by the direction in which the tip of the pointer 2B is oriented. The pointer 2C indicates the temperature (water temperature) of engine-cooling water by the direction in which the tip of the pointer 2C is oriented, for example. The pointers 2A, 2B, and 2C are driven by a drive part (movement) included in the meter portion 10. The drive part receives an electrical signal indicating a sensor output such as the engine speed, the remaining amount of fuel, or the water temperature, and converts the electrical signal into mechanical movements for changing the orientations of the pointers 2A, 2B, and 2C. The drive part for each pointer 2A, 2B, 2C includes an actuator such as a stepping motor.

The display element 13 is a digital meter rather than an analog meter. The display element 13 is, for example, an active matrix display, such as a liquid crystal display panel or an organic light emitting diode (OLED). In the following description, as an example, it is assumed that the display element 13 is a liquid crystal display (LCD). The display element 13 has a large number of pixels two-dimensionally arranged in a display region, and provides display visible to the human eye by emitting light from the large number of pixels. In this embodiment, each pixel of the display element 13 includes R, G, and B subpixels, and therefore, the display element 13 is capable of displaying color images. Unlike analog meters, the display element 13 is capable of displaying numerals, letters, graphics, icons, symbols, still images, or moving images having any appropriate sizes at any appropriate positions in the display region. Strictly speaking, numerals, letters, graphics, icons, and symbols are a part of images (still images or moving images) displayed in the display region by the display element 13. The display element 13 is also capable of apparently displaying an image similar to all or a portion of an analog meter having a pointer. In the case in which the display element 13 displays an image of an "analog meter", a "pointer" in the image can be turned in any appropriate direction as a portion of moving images, by changing images on a frame-by-frame basis. It should be noted that in the case in which the work vehicle is an electric vehicle that is driven by a battery, the display of the engine speed, the remaining amount of fuel, and the water temperature may, for example, be replaced by the display of a motor output, the state of charge of the battery, and the temperature of the battery, respectively.

The "analog meter" displayed by a display device such as the display element 13 is different from the first analog meter 11 and the second analog meter 12 in that the former is two-dimensional and the latter is three-dimensional. In addition, whereas the shape, color, and size of the pointer and scales of the former analog meter are changeable, it is difficult to change those of the latter. Furthermore, the visibility of the former depends on the contrast of an image, and therefore, is likely to decrease during the daytime, when external light is strong, whereas such a problem with the latter is relatively small. With the above in mind, in this embodiment, a portion of information displayed in the meter portion 10, particularly information having high importance and requiring high visibility, is displayed using an analog meter having a three-dimensional structure.

An external shape of the meter portion 10 when the meter portion 10 is viewed from the front of the display surface side is a closed loop similar to an ellipse. The external shape of the meter portion 10 is not limited to such an example. The external shape of the meter portion 10 when the meter portion 10 is viewed from the front may have generally a rectangular shape, or a shape that is a combination of a straight line and a curved line.

The meter panel unit 100 further includes a wall surface portion 20 fixed to the display surface side of the meter portion 10, and a transparent cover 30 opposite the display surface of the meter portion 10. Example configurations of the wall surface portion 20 and the transparent cover 30 will be described below.

The wall surface portion 20 surrounds the first analog meter 11, the display element 13, and the second analog meter 12 entirely along the peripheral edge of the meter portion 10. The wall surface portion 20 may, for example, be formed of a plastic (synthetic resin). The wall surface portion 20 protrudes vertically (the positive direction of the Z axis) from the display surface of the meter portion 10. The wall surface portion 20 does not necessarily need to be perpendicular to the display surface of the meter portion 10, and may be tilted from the Z axis. In the present disclosure, the distance between the display surface of the meter portion 10 and an end on the front side of the wall surface portion 20 is referred to as a "height" of the wall surface portion 20. In this embodiment, the height of the wall surface portion 20 is not uniform along the peripheral edge of the meter portion 10, and may vary depending on the position on the peripheral edge.

In this embodiment, a rough shape of the wall surface portion 20 when the wall surface portion 20 is viewed from the front of the meter portion 10 is a closed loop such as an ellipse. In such a region surrounded by the wall surface portion 20, or the inside of the wall surface portion 20, a single, continuous, three-dimensional space surrounded by the inner wall surface of the wall surface portion 20 is formed.

As illustrated in FIG. 3, the wall surface portion 20 includes a portion having a relatively great height and a portion having a relatively small height. The portion having a relatively great height of the wall surface portion 20 includes a visor region 20A. At least the visor region 20A of the wall surface portion 20 has light-blocking properties. The visor region 20A is arranged at a position above the display element 13 with the meter panel unit 100 attached to the work vehicle. The visor region 20A of the wall surface portion 20 serves as eaves to reduce a decrease in the display visibility of the meter portion 10 caused due to external light such as sunlight shining on the display element 13 or the like. A height (greatest height) Ha of the visor region 20A is at least 20 mm, preferably at least 35 mm, and more preferably at least 40 mm. When the wall surface portion 20 is viewed from the direction of the normal to the meter portion 10, the visor region 20A extends to the left and right across a range wider than the display element 13, surrounding an upper half portion of each of the first analog meter 11 and the second analog meter 12. The height of the visor region 20A is greatest above the display element 13 and becomes smaller toward the left and right ends of the display element 13.

The height of the wall surface portion 20 is relatively small at a position close to the lower end of the meter portion 10. The smallest height of the wall surface portion 20 may, for example, be at most 5 mm, or may be 0 mm.

FIG. 3 also illustrates, in addition to the wall surface portion 20, other structural components that are integral with the wall surface portion 20. As described above, the wall surface portion 20 may be made of a plastic, and therefore, the wall surface portion 20 and other structural components can be produced simultaneously by a resin molding technique. Structural components other than the wall surface portion 20 of FIG. 3 are described below.

As illustrated in FIG. 4, the transparent cover 30 includes a front surface section 30A including a concave surface 32, and a side surface section 30B extending from the peripheral edge of the front surface section 30A along the outer side of the wall surface portion 20. The side surface section 30B of the transparent cover 30 can cover the outer side of the wall surface portion 20 along all the periphery thereof. The transparent cover 30 may, for example, be made of a colorless, transparent plastic (e.g., acrylic resin), or glass. In this embodiment, the front surface section 30A and the side surface section 30B of the transparent cover 30 are integrally formed together.

When the transparent cover 30 is viewed from the direction of the normal to the meter portion 10 with the meter panel unit 100 attached to the work vehicle, the front surface section 30A of the transparent cover 30 is preferably tilted forward toward the operator. In the case in which the front surface section 30A is tilted forward, when the operator sees the meter portion 10 through the transparent cover 30, the operator's face and the background behind the operator are less likely to be reflected on the transparent cover 30.

Because the front surface section 30A of the transparent cover 30 has the concave surface 32, when the operator sees the meter portion 10 through the transparent cover 30, enlarged images of the operator and the background reflected by the transparent cover 30 are seen by the operator. This is because concave surface reflection occurs due to the front surface section 30A of the transparent cover 30. When information displayed by the meter portion 10 is represented by relatively small numerals, letters, graphics, or the like, the visibility of displayed information decreases as the spatial frequency of reflections on the transparent cover 30 decreases. According to this embodiment, such a decrease in visibility can be reduced.

The curvature ρ of the concave surface 32 of the transparent cover 30 is preferably uniform in each of the horizontal direction (the X-axis direction or the left-right direction) and the vertical direction (the Y-axis direction or the top-bottom direction). The curvature ρ determines the factor of magnification of a viewed image. As the curvature ρ is more uniform irrespective of direction, the concave surface 32 is closer to a portion of a sphere, and therefore, an enlarged image having a natural ratio is seen. It should be noted that the front surface section 30A does not necessarily need to have a concave surface. For example, in the case in which the front surface section 30A of the transparent cover 30 is covered with anti-reflection film, it is no longer necessary to address reflections, and therefore, the front surface section 30A may be a flat surface or a convex surface.

The side surface section 30B of the transparent cover 30 extends along the outer side of the wall surface portion 20. Therefore, the side surface section 30B has a height corresponding to the height of the wall surface portion 20. For example, the height of a portion of the side surface section 30B of the transparent cover 30 that covers the visor region 20A of the wall surface portion 20 is greater than that of the other portion. A space delimited by the front surface section 30A and the side surface section 30B of the transparent cover 30 is referred to as an "inner space" of the transparent cover 30. The shape and size of the inner space of the transparent cover 30 are great enough to accommodate substantially the entirety of the wall surface portion 20. As described above, a single, continuous, three-dimensional space surrounded by the inner wall surface of the wall surface portion 20 is formed inside the wall surface portion 20. A front side of this three-dimensional space is delimited and blocked by the transparent cover 30. The outer side of the wall surface portion 20 may be in contact with the inner side of the side surface section 30B of the transparent cover 30, or a space may be provided therebetween.

It should be noted that condensation of water vapor existing in the "inner space" is likely to occur to fog the transparent cover 30. In order to prevent such fogging, the surface of the transparent cover 30 may be coated with an antifogging agent. Alternatively, an antifogging effect can be obtained by providing a small opening in a portion of the meter portion 10 so that the inner space is in fluid communication with the outside. It should be noted that the transparent cover 30 does not need to be entirely transparent. For example, the side surface section 30B does not need to be transparent.

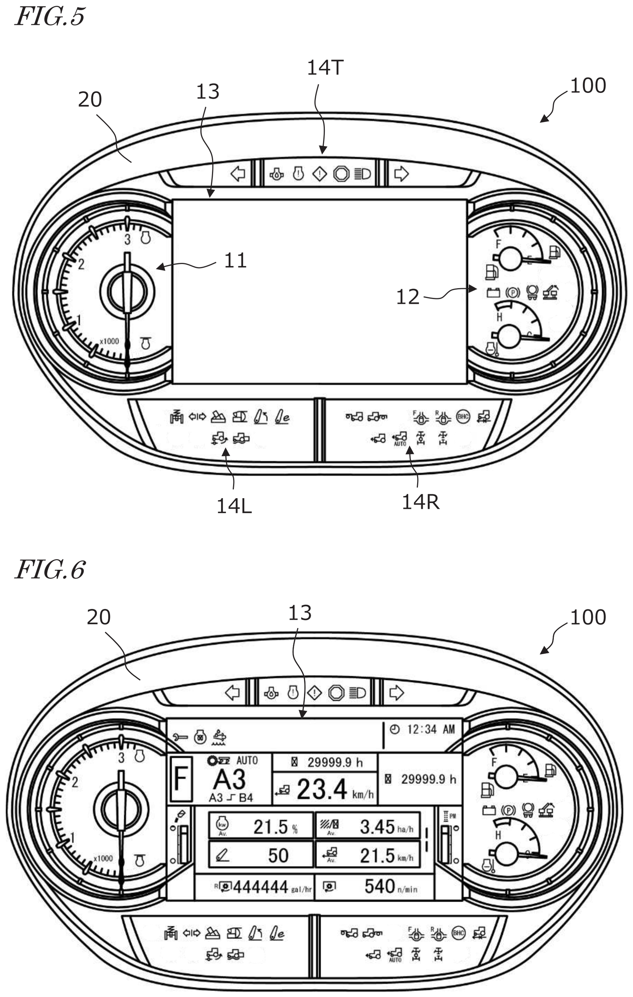

Next, an indicator region of the meter portion 10 will be described with reference to FIG. 5. In the example of FIG. 5, the meter portion 10 includes an indicator region 14T provided above the display element 13, and indicator regions 14L and 14R provided below the display element 13. Various indicators are provided in each of the indicator regions 14T, 14L, and 14R. Each indicator presents predetermined information such as warning when a light emitting device such as a light emitting diode (LED) behind the indicator is on.

It should be noted that in this embodiment, two indicator regions 14L and 14R that are divided left and right are arranged below the display element 13, but one indicator region that integrates the two indicator regions may be arranged.

Seeing the indicator region 14T, which is positioned above the display element 13, is less likely to be obstructed by the spokes 222A, 222B, and 222C of the steering wheel 220, compared to the other indicator regions 14L and 14R. Therefore, it is preferable that indicators for indicating particularly important information (information having a higher warning level) (e.g., indicators for indicating the on/off state of the illumination device, turn signals, and warnings to the operator) be selected from a large number of indicators and arranged in the indicator region 14T. The "warning level" of information displayed by an indicator may, for example, be specified in the manual of the work vehicle. For example, information such as the abnormality or failure of the engine and the on/off state of the headlamp has a higher warning level.

In this embodiment, each indicator arranged in the indicator region is composed of a light transmission region having a shape that defines a characteristic graphic (including icons and/or letters) and a light emitting device arranged behind the light transmission region. The indicator may be turned on/off by the light emitting device behind the indicator being turned on/off. One or two light emitting devices are arranged behind each indicator, for example.

Next, an example display of the display element 13 will be described with reference to FIG. 6. In the example of FIG. 6, the display region of the display element 13 is divided into several regions as described below. In each region, an "image" showing information such as the gear ratio, vehicle speed, function performance display, or hour meter is displayed. The images include various kinds of information represented by letters, numerals, graphics, icons, symbols, and the like. Various kinds of digital images may be indicated by different colors in order to increase the visibility. In particular, when the operator's attention should be attracted, display may be performed in which at least one of the positions, sizes, or colors of letters, numerals, graphics, icons, or symbols are changed and emphasized. When such emphasized display is performed, sound or speech may be emitted from an audio device such as a loudspeaker.

### <Communication ring and facing plate>

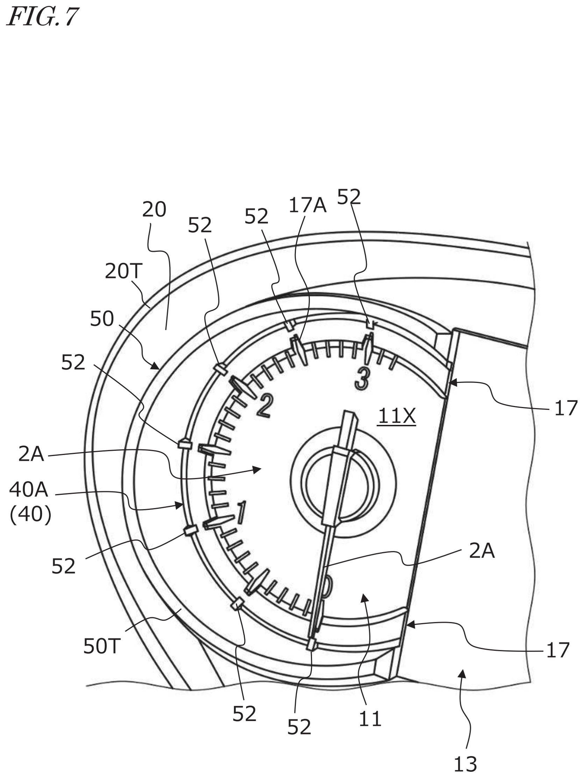

Next, an arc-shaped indicator (C-shaped communication ring) and a facing plate will be described with reference to FIGS. 7 to 9.

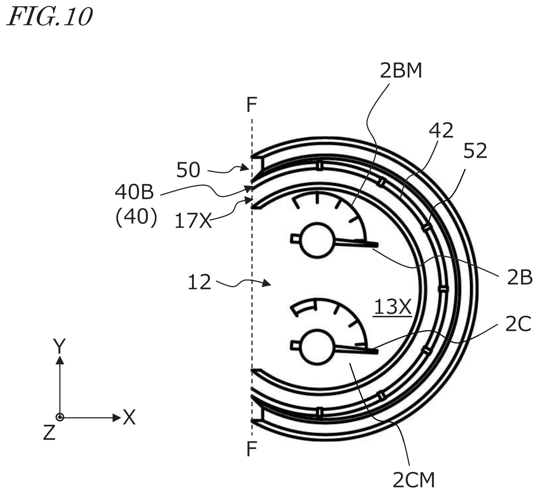

In this embodiment, the meter panel unit 100 includes a first arc-shaped indicator (communication ring) 40A arranged around a sweep range 11X of the pointer 2A, and a second arc-shaped indicator 40B (see FIG. 10) arranged around sweep ranges of the pointers 2B and 2C. In the present disclosure, the term "arc" means a portion of a circle (circumference). The circle is not limited to a "perfect circle", and may include a portion whose curvature is gradually or locally changed like a portion of an ellipse.

The structure of the first arc-shaped indicator 40A and the structure of the second arc-shaped indicator 40B are symmetrical about a vertical line, and therefore, are collectively referred to as arc-shaped indicators 40. The arc-shaped indicators 40 will be described below using the first arc-shaped indicator (communication ring) 40A as an example, for the sake of simplicity.

As illustrated in FIG. 7, the meter panel unit 100 of this embodiment includes a facing plate 50 positioned outward of the arc-shaped indicator 40. The facing plate 50 is formed of the same material (plastic) as that for the wall surface portion 20. As illustrated in FIG. 3, the facing plate 50 is integral with the wall surface portion 20. The facing plate 50 is in the shape of roughly an arc as viewed from the front. A height of an upper end 50T of the facing plate 50 varies continuously from an end 50A on the upper side to an end 50B on the lower side, and is greatest at a middle position. The facing plate 50 is a curved wall rising from the meter portion 10. A height of the visor region 20A of the wall surface portion 20 from the meter portion 10 is greater than a height of the facing plate 50 from the meter portion 10. In other words, the greatest height of the visor region 20A from the meter portion 10 is greater than the greatest height of the facing plate 50 from the meter portion 10.

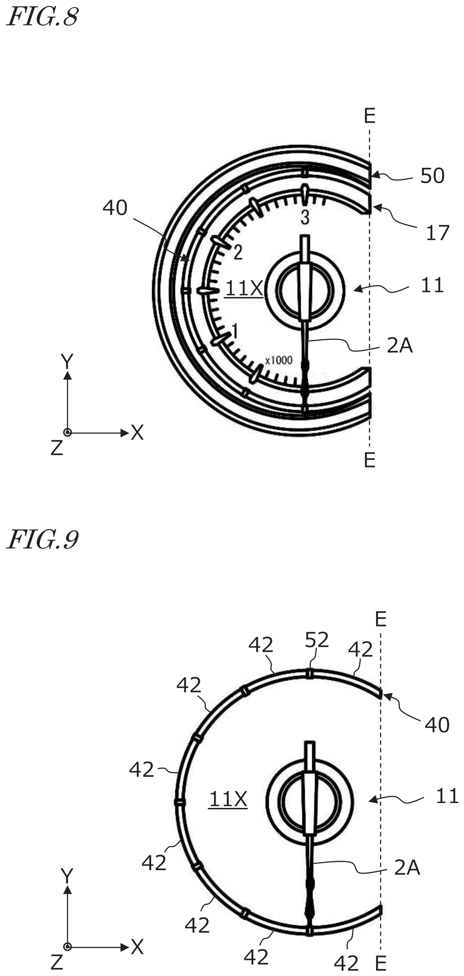

FIG. 8 is a front view illustrating a positional relationship between the first analog meter 11, the arc-shaped indicator 40, and the facing plate 50. FIG. 9 is a front view mainly illustrating an example configuration of the arc-shaped indicator 40. None of the first analog meter 11, the arc-shaped indicator 40, and the facing plate 50 extends rightward (the positive direction of the X axis) beyond a dashed line E-E of FIG. 8. The display element 13 is arranged rightward (in the positive direction of the X axis) of the dashed line E-E.

With such a configuration, while the length of the pointer 2A, or the radius of the first analog meter 11, is increased, an increase in the size in the horizontal direction (X-axis direction) of the first analog meter 11 can be reduced. This also holds true for the second analog meter 12. It should be noted that as illustrated in FIG. 1B, when the size in the horizontal direction of the meter portion 10 is increased, the spokes 222A and 222B of the steering wheel 220 are more likely to obstruct seeing of the first and second analog meters 11 and 12. Therefore, it is not preferable to increase the size in the horizontal direction of the meter portion 10. In this embodiment, the analog meter is contained inside a shape surrounded by the dashed line E-E and an arc rather than a circle. Therefore, even for the meter portion 10, which has a limited size in the horizontal direction, the size in the horizontal direction (X-axis direction) of the display element 13 can be increased while the visibility of the first and second analog meters 11 and 12 is increased. In addition, because the first and second analog meters 11 and 12 and the display element 13 are separated from each other by a straight line, the display area for analog information and the display area for digital information can be clearly separated from each other, and therefore, the visibility of both analog information and digital information can be improved.

In order to obtain the above effect, it is preferable that the central angle of the "arc" of the arc-shaped indicator 40 (40A), which is arranged, surrounding the first analog meter 11, be greater than 180° and smaller than 270°. If the central angle of the "arc" is at most 180°, the visibility of the first analog meter 11 decreases. If the central angle of the "arc" is at least 270°, the effect of reducing the size in the horizontal direction (X-axis direction) of the first analog meter 11 is not sufficient. This also holds true for the arc-shaped indicator 40 (40B) surrounding the second analog meter 12. In terms of design properties, it is preferable that the left and right arc-shaped indicators 40A and 40B be positioned symmetrically about a vertical line passing through the center of the display element 13.

The arc-shaped indicator 40 has at least one light emitting region 42 between the sweep range 11X of the pointer 2A and the facing plate 50. In the example of FIG. 9, a plurality of light emitting regions 42 are provided. In this example, each light emitting region 42 has a fine curved shape extending along an arc. The plurality of light emitting regions 42 are arranged in a sequence of arcs to form the arc-shaped indicator 40. In the case in which the number of light emitting regions 42 is one, a single light emitting region 42 has an arc shape.

In the example illustrated in the Figure, the first analog meter 11 includes an arc-shaped scale 17 between the arc-shaped indicator 40 and the sweep range 11X of the pointer 2A. The scale 17 has a three-dimensional shape protruding from the display surface (raised scale). The scale 17 is formed of a plastic integrally with the wall surface portion 20 and the facing plate 50. It should be noted that the scale 17 does not necessarily need to have a three-dimensional shape. The scale 17 desirably has a three-dimensional shape in terms of higher visibility.

Although the plurality of light emitting regions 42 included in the arc-shaped indicator 40 may each include a light emitting element (e.g., an LED or OLED), in this embodiment the plurality of light emitting regions 42 are configured with a plurality of light transmission regions provided on the display surface of the meter portion 10 (i.e., the surface on the front side of the housing of the meter portion 10) and at least one light emitting device arranged behind the plurality of light transmission regions.

The plurality of light emitting devices may include a plurality of LEDs that emit different colors. In this embodiment, the plurality of light emitting devices include an LED that emits red light, an LED that emits green light, and an LED that emits blue light. By causing these LEDs to selectively emit light, the arc-shaped indicator 40 can exhibit the function of notifying the operator of information using light having various colors. For example, all of the light emitting regions 42 of FIG. 9 can selectively emit red light, green light, and blue light. Alternatively, a light emitting device may be assigned to each of the plurality of light emitting regions 42, and the plurality of light emitting devices may be caused to emit light separately, so that light beams can be sequentially emitted from the plurality of light emitting regions 42.

### <Raised scale>

Next, the raised scale 17 will be described. As illustrated in FIGS. 7 and 8, the raised scale 17 extends in the shape of an arc inside the arc-shaped indicator 40 to form generally a C-shape. As illustrated in FIGS. 3 and 7, the raised scale 17 includes a plurality of notches 17A arranged at predetermined intervals. The notch 17A is a portion of the raised scale 17 whose width is locally reduced. The position of the notch 17A corresponds to the position of a scale that is to be indicated by the tip of the pointer 2A in the first analog meter 11. The presence of the three-dimensional notches 17A facilitates reading of scales by the operator.

As illustrated in FIG. 7, the facing plate 50 includes a plurality of protrusions 52 that protrude toward the sweep range 11X of the pointer 2A. The plurality of protrusions 52 are provided at the positions of the notches of the raised scale 17, or in other words, positions aligned with the scales. Therefore, the notch 17A of the raised scale 17 is recognized as a graphic integrated with the protrusion 52, resulting in an improvement in the visibility of the scale. Each protrusion of the plurality of protrusions 52 extends across between the plurality of light emitting regions 42 of the arc-shaped indicator 40. Therefore, the array of the plurality of light emitting regions 42 also corresponds to the array of the scales.

As can be seen from FIG. 3, the plurality of protrusions 52 serve as a bridge that connects the raised scale 17 to the facing plate 50. The facing plate 50 is connected to the wall surface portion 20. In this embodiment, the wall surface portion 20, the facing plate 50, and the raised scale 17 are integrally formed of a resin. The plurality of protrusions 52, which extend from the facing plate 50, delimit a boundary portion of the plurality of light emitting regions 42 in the arc-shaped indicator 40.

Next, the second analog meter 12 and the second arc-shaped indicator 40B will be described with reference to FIG. 10. The second arc-shaped indicator 40B and the first arc-shaped indicator 40A are symmetrical about a vertical line, and have substantially the same configuration. A facing plate (right facing plate) 50 is provided outward of the second arc-shaped indicator 40B. The left facing plate 50 and the above facing plate (left facing plate) 50 are symmetrical about a vertical line.

Although an arc-shaped rib 17X corresponding to the raised scale 17 is provided inside the second arc-shaped indicator 40B, no notches are present in the arc-shaped rib 17X. Protrusions (bridges) 52 are equally spaced and arranged between the arc-shaped rib 17X and the right facing plate 50 so as to delimit a plurality of light emitting regions 42 included in the second arc-shaped indicator 40B.

A sweep range 13X of the second pointer 2B and the third pointer 2C is provided in a range surrounded by the second arc-shaped indicator 40B. A rotational angle range 2BM of the second pointer 2B and a rotational angle range 2CM of the third pointer 2C have a similar or congruent outer shape.

With such a configuration, scales can be intuitively read based on the movements of the second pointer 2B and the third pointer 2C, and are less likely to be erroneously read.

### <Information display system>

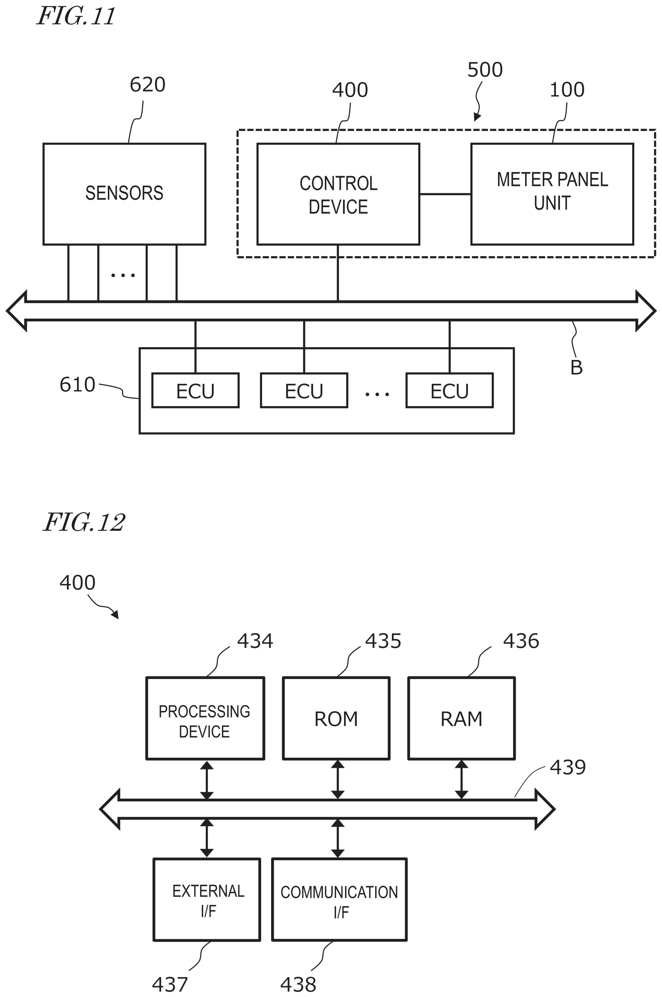

An information display system 500 according to an embodiment of the present disclosure will be described below with reference to FIGS. 11 to 14. FIG. 11 is a block diagram schematically illustrating an example configuration of the information display system 500 in an embodiment of the present disclosure. The information display system 500 includes the above meter panel unit 100, and a control device 400 that controls the meter panel unit 100. The control device 400 may include an electronic control unit (ECU) arranged in the work vehicle. The information display system 500 may further include an audio device such as a buzzer or a speaker.

The information display system 500 is communicably connected via a bus B to ECUs 610 and sensors 620 included in the work vehicle. The ECUs 610 may be collectively referred to as a "vehicle control device". In the present specification, various ECUs included in the work vehicle are referred to as "vehicle ECUs", and an ECU in the control device 400 included in the information display system 500 is referred to as a "meter ECU" to distinguish between the two. Various vehicle ECUs and the meter ECU can communicate with each other according to a vehicle bus standard such as CAN (Controller Area Network), for example. For example, one vehicle ECU among the ECUs 610 included in the work vehicle receives signals from other vehicle ECUs and sensor data output from each sensor included in the sensors 620, and instructs the meter ECU to display warning messages as described below or to turn on/off/blink indicators according to the state of the work vehicle. The meter ECU receives instructions from the vehicle ECU and causes warning messages to be displayed in the display region or causes indicators to be turned on or off, or to blink.

In FIG. 11, illustration of wiring other than the wiring of the bus B is simplified. However, for example, there may be wiring for directly transmitting signals from one or more sensors included in the sensors 620 included in the work vehicle to the control device 400, or wiring connecting an input device described below and the control device 400. In addition, there is power supply wiring for supplying power from a battery to each of the meter panel unit 100, the control device 400, the ECUs 610, and the sensors 620 of the work vehicle.

FIG. 12 is a block diagram illustrating an example hardware configuration of the control device 400. The control device 400 includes a processing device 434, a read only memory (ROM) 435, a random access memory (RAM) 436, an external I/F 437, and a communication I/F 438. These components are interconnected via a bus 439.

The processing device 434 is a device including one or more semiconductor integrated circuits (e.g., processors). A processor is also referred to as a central processing unit (CPU) or a microprocessor. The processor sequentially executes computer programs stored in the ROM 435 to realize various processes necessary for image display. The processor is broadly interpreted as a term including a field programmable gate array (FPGA) equipped with a CPU, a graphics processing unit (GPU), an application specific integrated circuit (ASIC), or an application specific standard product (ASSP).

The ROM 435 is, for example, a writable memory (e.g., PROM), a rewritable memory (e.g., flash memory), or a read-only memory. The ROM 435 stores programs that control the operation of the processor. The ROM 435 does not need to be a single recording medium and may be a collection of multiple recording media. A portion of the multiple collections may be removable memory.

The RAM 436 provides a working area for temporarily expanding programs stored in the ROM 435 at boot time. The RAM 436 does not need to be a single recording medium and may be a collection of multiple recording media.

The external I/F 437 is an interface for connecting the meter panel unit 100 to external devices. Examples of the external I/F 437 include a universal serial bus (USB) interface and digital or analog video interfaces.

The communication I/F 438 is an interface for performing communication between the control device 400 and other electronic components or ECUs. For example, the communication I/F 438 can perform wired communication in accordance with various protocols. The communication I/F 438 may perform wireless communication in accordance with Bluetooth^{®} standards and/or Wi-Fi^{®} standards. Both standards include wireless communication standards using frequencies in the 2.4 GHz band.

The control device 400 may further include a storage device. The storage device may be, for example, a semiconductor memory, a magnetic storage device, or an optical storage device, or a combination thereof.

The ECUs 610 included in the work vehicle include, for example, an ECU for speed control, an ECU for steering control, and an ECU for implement control. When the work vehicle (e.g., tractor) is configured to travel by automatic driving, the ECUs 610 may further include an ECU for automatic driving control. The ECU for automatic driving control performs calculations and control for realizing automatic driving based on data output from various sensors mounted on the vehicle body.

The sensors 620 may include, for example, a temperature sensor, an illuminance sensor, a fuel sensor, a water temperature sensor, an oil level gauge, an engine rotation sensor, a vehicle speed sensor, a battery voltage sensor, a shuttle sensor, a hand accelerator sensor, an accelerator pedal sensor, a main transmission lever sensor, a sub-transmission lever sensor, a seat belt sensor, a PM sensor, an acceleration sensor, an angular velocity sensor, an inertial measurement unit (IMU), a geomagnetic sensor, an imaging device, a LiDAR sensor, an ultrasonic sensor, an obstacle contact sensor, and a global navigation satellite system (GNSS) receiver.

The control device 400 of the information display system 500 may be an integrated circuit device mounted on a substrate inside the meter panel unit 100, or may be an external integrated circuit device externally attached to the meter panel unit 100. Furthermore, some or all of the functions of the control device 400 may be realized by one or more vehicle ECUs. Alternatively, some or all of the functions of the control device 400 may be realized by one or more servers (computers) connected via the communication I/F 438 through a communication network. In this way, one or more vehicle ECUs and/or one or more servers may cooperate with the control device 400 to realize various functions required for the information display system 500. In this case, the vehicle ECU and/or the server function as part of the information display system 500.

In the information display system 500 of this embodiment, the control device 400 is configured to cause the arc-shaped indicator 40 to display information before causing the display element 13 to display various kinds of information when the work vehicle is started. This allows information that the operator should know in the first place to be presented to the operator with higher priority at startup. Such information has information indicating a state (a state classified as abnormality in traveling or working) of the work vehicle. The control device 400 is also configured to change the color of emitted light according to contents of information. For example, the control device 400 may be configured to emit blue light from the arc-shaped indicator 40 when an abnormality does not arise during starting, and to emit red light indicating an abnormality immediately after starting if a problem is expected to arise during traveling. Examples of a cause for a problem that will arise during traveling include an abnormal voltage of a battery, an abnormal pressure of an engine oil, abnormal heating of an engine, and an abnormality in a brake system. It should be noted that the color of the emitted light is not limited to blue or red, and may be green.

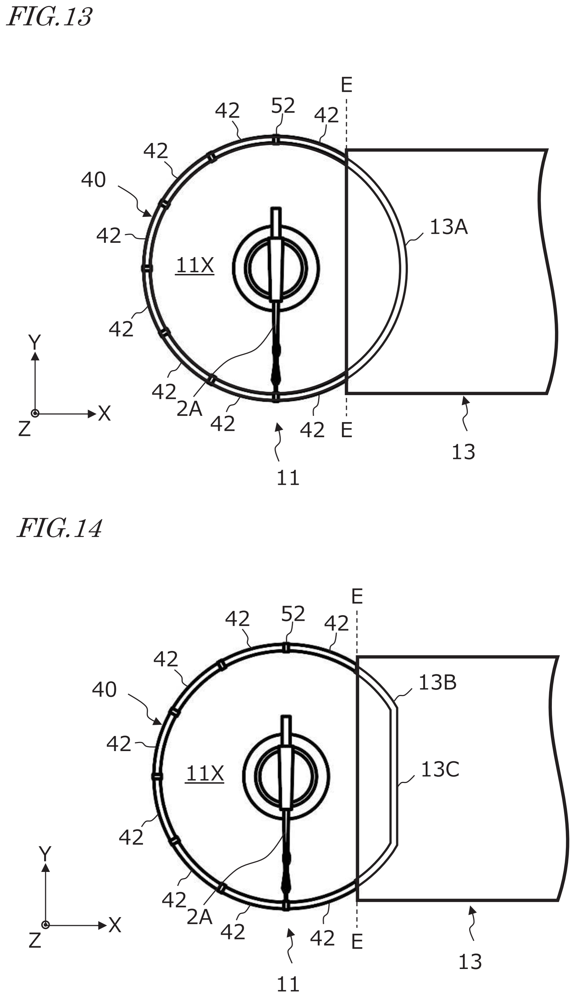

Furthermore, in this embodiment, the control device 400 is configured to cause the display element 13 to display a curved line-shaped image positioned on an extension line of the arc. FIG. 13 is a front view schematically illustrating an example in which an arc 13A having the same color as that of light emitted from the light emitting region 42 of the arc-shaped indicator 40 is displayed. In FIG. 13, as an example, an arc 13A having the same center as that of the arc of the arc-shaped indicator 40 is displayed. FIG. 14 is a front view schematically illustrating an example in which an arc 13B having the same color as that of light emitted from the light emitting region 42 of the arc-shaped indicator 40, and a second object 13C having another shape and having an arc having the same color, are displayed. In the example of FIG. 14, the second object 13C is a straight line portion. The control device 400 causes the display element 13 to display the concentric arc 13B with the arc of the light emitting region 42, and the straight line portion connected to the arc 13B. The straight line portion extends in parallel with a straight line forming the boundary between the first analog meter 11 and the display element 14 (corresponding to a dashed line E-E of FIG. 14). By providing such display, a portion of the circle surrounding the first analog meter 11 that is cut away by the dashed line E-E is seen as a portion of the first analog meter 11 by the operator, and therefore, the operator can feel that the first analog meter 11 is large. In addition, an image that is displayed as if the image were a portion of the first analog meter 11 (hereinafter referred to as a "ring complementing image") may be partially hidden by information such as numerals or letters displayed on the display element 13. Similarly to the shaped object 13C, the portion of the arc 13B may include a straight line shape. By including a straight line shape in the portion displayed on the display element 13, a sharp design can be achieved.

The control device 400 can cause the display element 13 to display various images, which are not limited to the examples of FIGS. 13 and 14, in association with light emitted from the light emitting region 42 of the arc-shaped indicator 40. The control device 400 can also cause the display element 13 to display various images in synchronization with the flickering of the light emitting region 42 of the arc-shaped indicator 40. What is intended by the display of the arc-shaped indicator 40 to notify the operator can be more easily understood by the operator by emphasizing that display and the display of the display element 13 or associating these displays with each other.

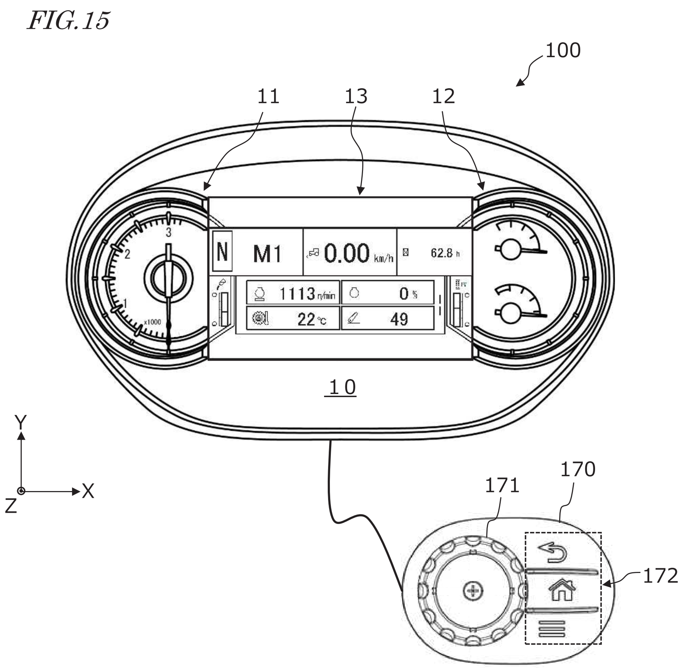

After startup of the meter panel unit 100, a home screen is displayed in the display region of the display element 13. FIG. 15 is a diagram illustrating an example of a home screen. Starting from the home screen, the user can perform operations to change the display of content on the display region or select various setting items using an input device described below.

In the example illustrated in FIG. 15, an input device 170 that enables interactive operations by the user is connected to the meter panel unit 100 via a communication cable. The input device 170 has, for example, a selector switch 171 such as a jog dial and an operation switch 172. The input device 170 may be connected to the meter panel unit 100 wirelessly or by wire. Any device that accepts user operations can be used as the input device 170. The input device 170 may be, for example, a rotary switch, a slide switch, a push button switch, a touch screen, a joystick, or a combination of two or more thereof.

The display element 13 includes a display region in which various images showing information about the work vehicle are displayed. Information about the work vehicle includes, for example, information related to an internal combustion engine (engine), the vehicle body, a PTO shaft, hydraulics/three-point hitch, and electrical equipment provided in the vehicle body. This information is information indicating the internal state of the vehicle system. Information related to the vehicle body includes, for example, information about the direction of travel of the vehicle, clutch, transmission, brakes, headland control, and cruise control. Furthermore, various content including, for example, camera images, radio setting screens, and audio setting screens may be displayed in the display region of the display element 13.

### <Segmentation of display region>

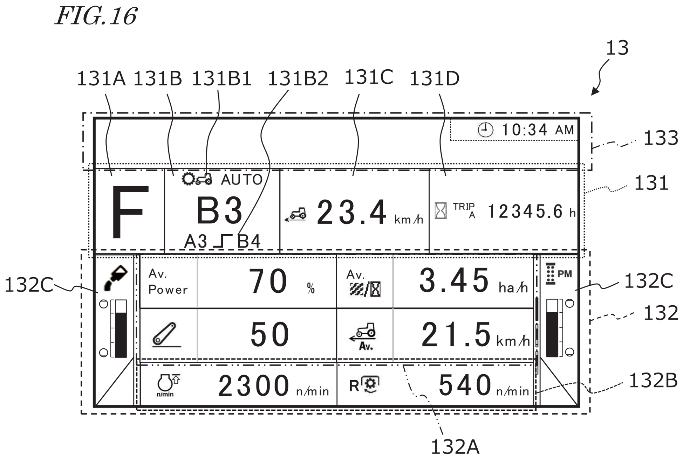

Next, segmentation of the display region will be described with reference to FIG. 16. FIG. 16 is a diagram schematically illustrating an example of segmentation of the display region. The display region of the display element 13 is divided into multiple blocks. In other words, the display region of the display element 13 has multiple regions. The multiple regions in the example illustrated in FIG. 16 include a primary region 131, a sub-region 132, and an LCD indicator region 133. The primary region 131 in FIG. 16 is a region surrounded by a dotted line in the display region of the display element 13. The sub-region 132 is a region surrounded by a dashed line in the display region of the display element 13. The LCD indicator region 133 is a region surrounded by a dash-dot line in the display region of the display element 13. These three regions do not overlap with each other. It should be noted that the dashed lines, dotted lines, and dash-dot lines in FIG. 16 are partially overlapping for clarity.

The primary region 131 is a region for displaying images in the foreground (or front). The primary region 131 in the example illustrated in FIG. 16 is a rectangular region (or panel-shaped region). However, the external shape of the primary region 131 may be, for example, an ellipse or a figure that is a combination of straight lines and curved lines. A primary image showing more important information (hereinafter referred to as "main information") among information about the work vehicle is displayed in the primary region 131. The main information is information that the user should know with priority, and includes, for example, information indicating the direction of travel of the work vehicle, transmission state, and vehicle speed (hereinafter referred to as "vehicle speed").

The main information indicated by the primary image displayed in the primary region 131 in this way is displayed in the foreground of the display region. As illustrated in FIG. 15, the primary image is displayed in front of the ring complementing image. In this way, the primary image can appropriately convey main information to the user without being hidden by other images or content. Therefore, the visibility of main information having particularly high importance among various information is improved, and overlooking of main information is reduced.

In the example illustrated in FIG. 16, the primary region 131 has a belt-like shape extending in the horizontal direction. Multiple types of information about the travel state of the work vehicle are displayed in the primary region 131. The primary region 131 is divided into multiple regions. In the example of FIG. 16, the primary region 131 is divided into a first region 131A, a second region 131B, a third region 131C, and a fourth region 131D arranged horizontally.

The first region 131A positioned at the left end displays the state of the shuttle lever of the work vehicle, that is, the direction of travel. The first region 131A displays, for example, information indicating whether the shuttle lever is in a forward (F), neutral (N), or reverse (R) state.

The second region 131B positioned second from the left displays information about the transmission state, for example, setting of the gear stage of the work vehicle. In the example of FIG. 16, the current settings of the main transmission and sub-transmission are displayed as "B3" symbols in the second region 131B. "B" indicates the setting stage of the sub-transmission, and "3" indicates the setting stage of the main transmission. The second region 131B may display an icon 131B1 indicating that it is in automatic transmission mode and a range 131B2 of gear stages in the automatic transmission mode, as illustrated in FIG. 16.

The third region 131C displays vehicle speed information. The control device 400 switches and displays vehicle speed information in kilometer units or mile units according to, for example, commands from the vehicle ECU.

The fourth region 131D at the right end displays information other than the direction of travel, transmission state, and vehicle speed. In the example of FIG. 16, the fourth region 131D displays the measured value of the hour meter, that is, the operating time of the work vehicle up to now. The fourth region 131D may display other information, not limited to the measured value of the hour meter. For example, various information such as the upper limit setting value of engine speed or the target value of engine speed recorded in memory may be displayed in the fourth region 131D. The control device 400 may be configured to dynamically change the display of the fourth region 131D according to, for example, commands from the vehicle ECU. The fourth region 131D, together with a region 132B described below, dynamically displays the performance of travel and work of the work vehicle. Therefore, the fourth region 131D is sometimes referred to as a "dynamic performance monitor region".

The sub-region 132 is positioned below the primary region 131. Various content is displayed in the sub-region 132. The sub-region 132 in the example illustrated in FIG. 16 is a rectangular region and is further divided into three types of regions. The sub-region 132 includes a performance monitor region 132A, a dynamic performance monitor region 132B, and two gauge regions 132C.

The performance monitor region 132A is the largest region among the three regions included in the sub-region 132 and is positioned toward the upper side of the sub-region 132. The performance monitor region 132A is sometimes referred to as the "upper region" in the sub-region 132. The performance monitor region 132A mainly displays one or more items selected by the user (hereinafter referred to as "selected items") from among various items showing various functional performance information. Examples of items that can be selected by the user include information about engine speed, engine speed upper limit setting value, engine speed memory value, fuel consumption, fuel efficiency, travel distance, load factor, PTO shaft rotation speed, slip rate, diesel particulate filter (DPF) regeneration, and work area.

The screen of selected items may be composed of multiple pages that can be advanced or returned by the user operating the input device. FIG. 16 shows an example of multiple selected items displayed on one page among multiple pages. In the example illustrated in FIG. 16, four selected items are displayed on one page. However, the number of selected items displayed on one page is not limited to four and may be, for example, two, three, or five or more.

The dynamic performance monitor region 132B is positioned toward the lower side of the sub-region 132. The dynamic performance monitor region 132B is sometimes referred to as the "lower region" in the sub-region 132. Various items showing the various functional performance information described above may be displayed in the dynamic performance monitor region 132B. The display of information displayed in the dynamic performance monitor region 132B may be controlled by the control device 400 (e.g., meter ECU) that receives commands from, for example, the vehicle ECU. The control device 400 may be configured to change the display of the dynamic performance monitor region 132B in response to commands from the vehicle ECU. As illustrated in FIG. 16, for example, two items may be displayed in the dynamic performance monitor region 132B. However, the number of items is not limited to two. Nothing may be displayed in the dynamic performance monitor region 132B as illustrated in FIG. 15.

The gauge regions 132C are positioned on the right and left sides of the sub-region 132. The performance monitor region 132A and the dynamic performance monitor region 132B are positioned between the two gauge regions 132C on the right and left. Gauge images including icons and scales may be displayed in each of the gauge regions 132C on the right and left sides. Examples of gauge images include information about the remaining amount of diesel exhaust fluid (DEF), particulate matter (PM) accumulation, and tire air pressure.

The images displayed in the performance monitor region 132A and the dynamic performance monitor region 132B may be changed according to user operations using the input device. For example, camera images, images for radio or audio settings, images for front loader control, images for cylinder flow control, images for operation member settings, images for steering assist control, images for automatic steering control, images for attachment work machine control, or launch images displaying a list of functional items may be displayed in a region corresponding to the entire performance monitor region 132A and dynamic performance monitor region 132B. By integrating two or more regions and using them as one region in this way, images and content can be displayed relatively large.

The LCD indicator region 133 is positioned above the primary region 131. The LCD indicator region 133 in the example illustrated in FIG. 16 is a rectangular region like the primary region 131 and the sub-region 132. The LCD indicator region 133 functions as a region for displaying information indicating the state of the work vehicle, warning information, maintenance-related information, and the like. For example, indicators that turn on when a warning state such as brake warning or fuel remaining warning should be issued and turn off when the state is resolved may be displayed in the LCD indicator region 133. As another example, indicators that turn on periodically to prompt the user for maintenance such as DPF regeneration or engine oil change may be displayed in the LCD indicator region 133. As a further example, indicators for requesting an increase or decrease in engine speed may be displayed in the LCD indicator region 133. In the LCD indicator region 133, no indicators are normally displayed, and a black background is displayed. When a state requiring display of warning or maintenance information arises, the indicator corresponding to that warning or maintenance information turns on. A maximum of, for example, about 10 indicators may be displayed in the LCD indicator region 133. Since indicators can be displayed prominently against a black background, it is possible to make it easier for the operator or user to notice the occurrence of LCD indicators.

The LCD indicator region 133 is positioned below the indicator region 14T illustrated in FIG. 5. The indicators arranged in the indicator region 14T are hardware indicators that are turned on by light emitting devices such as LEDs. In contrast, the indicators displayed in the LCD indicator region 133 are turned on by drawing processing on the LCD. In this specification, hardware indicators using LEDs are referred to as "LED indicators", and indicators displayed in the LCD indicator region 133 are referred to as "LCD indicators," and the two may be distinguished.

A popup image including a message for notifying the user of the content of an abnormality or failure when, for example, an abnormality or failure of the engine or electrical equipment is detected, or a message for warning about the internal state of the vehicle system (hereinafter sometimes referred to as a "popup image") may also be displayed in the sub-region 132 illustrated in FIG. 16. In addition, popup images including messages indicating maintenance information may also be displayed in the sub-region 132.

Next, display operations relating to DPF (Diesel Particulate Filter) regeneration of the work vehicle 200 will be described.

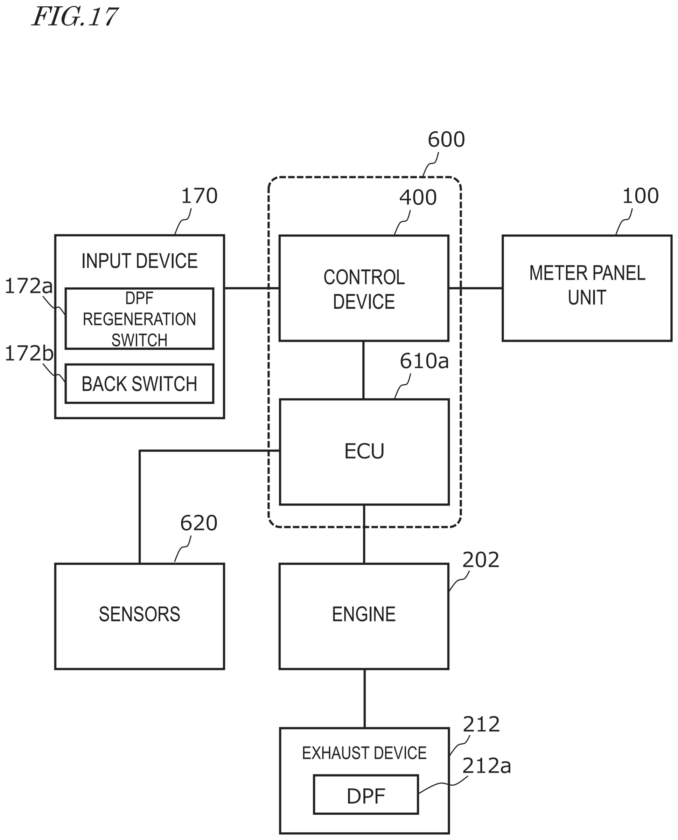

FIG. 17 is a block diagram illustrating some components of the work vehicle 200. As described above, the prime mover 202 included in the work vehicle 200 is, for example, a diesel engine. The work vehicle 200 includes an exhaust device 212 that discharges exhaust gas from the diesel engine 202 to the outside. The exhaust device 212 is provided with a DPF 212a that collects particulate matter (PM) in the exhaust gas. When the amount of particulate matter collected by the DPF 212a becomes at least a specified amount, "DPF regeneration" is executed to reduce the particulate matter in the DPF 212a and restore the collection capacity of the DPF 212a. For example, by making the exhaust gas of the engine 202 high temperature or mixing fuel with the exhaust gas, the particulate matter in the DPF 212a can be reduced. Since DPF and DPF regeneration are well known, detailed descriptions thereof are omitted here. DPF regeneration may be performed when the work vehicle 200 is parked or while the work vehicle 200 is traveling. "Parking" in this embodiment also includes a state in which the work vehicle 200 is stopped with a person still on board. During execution of DPF regeneration, the engine 202 is operating. The following describes an example of performing DPF regeneration when the work vehicle 200 is parked.

As illustrated in FIG. 17, the work vehicle 200 includes a control device 600. The control device 600 may be a control unit including the control device 400 and an ECU 610a. The ECU 610a is one of the ECUs included in the ECU group 610 (FIG. 11). The ECU 610a may be a unit combining two or more ECUs included in the ECU group 610. The information display system 500 of this embodiment includes the control device 600.

One of the sensors included in the sensor group 620 detects the amount of particulate matter collected by the DPF 212a and outputs sensor data to the ECU 610a. When the ECU 610a determines that the amount of particulate matter collected in the DPF 212a has become at least a specified amount based on the received sensor data, it causes the display element 13 to display information prompting the user to perform DPF regeneration. The display control of the display element 13 is performed via the control device 400. The display control of the display element 13 by the ECU 610a described below may also be performed via the control device 400. The control device 400 performs data communication with the ECU 610a and causes the display element 13 to display various information.

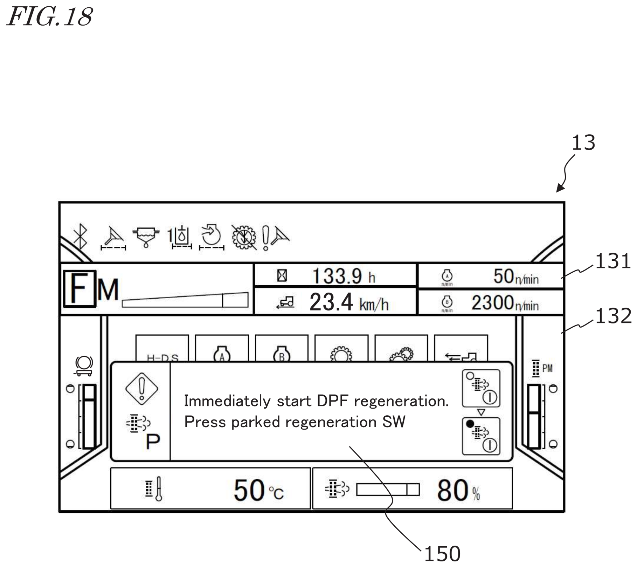

FIG. 18 is a diagram illustrating an example of the display element 13 displaying information 150 prompting the user to perform DPF regeneration. The displayed information 150 includes, for example, text. By reading the displayed text, the user can recognize details of the presented information. By displaying information as text, the user can easily understand what is required compared to when only icons and symbols are displayed.

As illustrated in FIG. 17, the input device 170 includes a DPF regeneration switch 172a and a back switch 172b. The DPF regeneration switch 172a and the back switch 172b are provided at any position of the work vehicle 200. The DPF regeneration switch 172a is a switch that receives an instruction from the user to execute DPF regeneration. As described above, in this embodiment, DPF regeneration is executed when the work vehicle 200 is parked. The DPF regeneration switch 172a may be referred to as a "Parked Regeneration Switch". The back switch 172b is a switch that receives from the user an instruction to change the display content of the display element 13, for example, an instruction to switch to display of higher-level information.

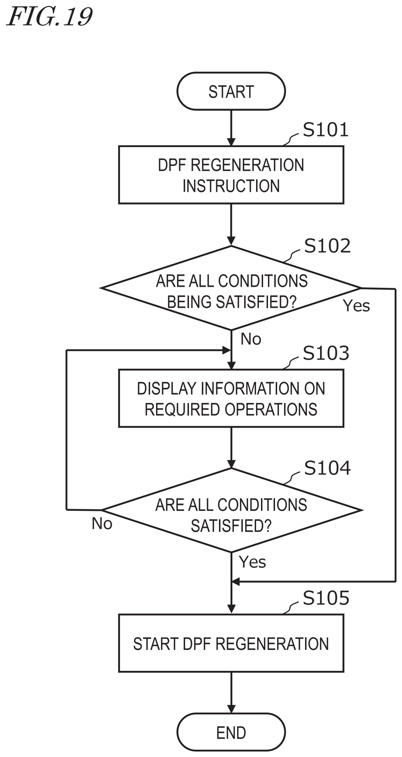

FIG. 19 is a flowchart illustrating an example of operations relating to DPF regeneration. A user who sees the information 150 (FIG. 18) prompting the user to perform DPF regeneration operates the DPF regeneration switch 172a (step S101). When the DPF regeneration switch 172a is a push button switch, the user presses the DPF regeneration switch 172a.

Upon receiving an instruction from the user to execute DPF regeneration, the ECU 610a determines whether all conditions necessary for executing DPF regeneration when the work vehicle 200 is parked are satisfied (step S102). Such conditions are, for example, "the speed control pedal is in the neutral position", "the parking brake is in the on state (operating state)", "the operation of the PTO shaft is in the off state", "the throttle lever is in the low idling position", "the DPF regeneration prohibition switch is in the off state", and the like. These states can be detected by various sensors included in the sensor group 620. The ECU 610a can determine whether all conditions necessary for executing DPF regeneration are satisfied based on sensor data output by various sensors.

For example, based on sensor data output by a position sensor that detects the position of the speed control pedal, the ECU 610a can determine whether the speed control pedal is in the neutral position. For example, based on sensor data, switch data, and the like output by a position sensor that detects the position of the parking brake, the ECU 610a can determine whether the parking brake is in the on state. For example, based on sensor data, switch data, and the like output by a rotation sensor that detects rotation of the PTO shaft, the ECU 610a can determine whether the operation of the PTO shaft is in the off state. For example, based on sensor data output by a position sensor that detects the position of the throttle lever, the ECU 610a can determine whether the throttle lever is in the low idling position.

When the work vehicle 200 does not satisfy at least one of the conditions necessary for execution of DPF regeneration, the ECU 610a does not perform control to execute DPF regeneration. In this case, the ECU 610a causes the display element 13 to display information relating to operations to be performed by the user for the work vehicle 200 to satisfy the conditions (step S103).

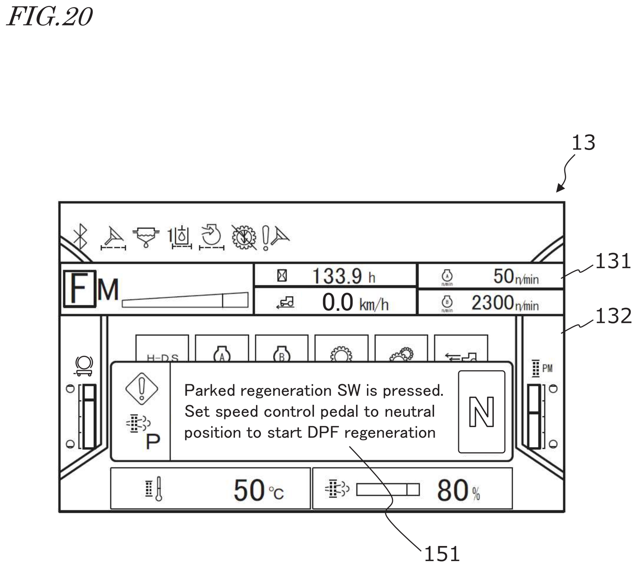

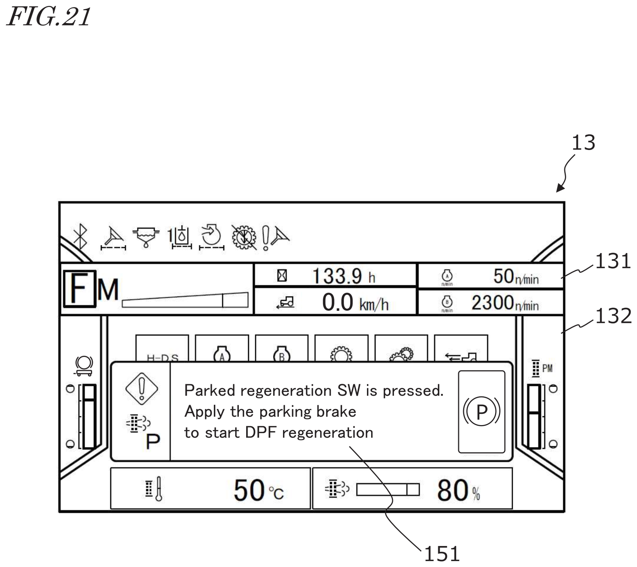

FIGS. 20 and 21 are diagrams illustrating examples of the display element 13 displaying information 151 relating to operations to be performed by the user for the work vehicle 200 to satisfy the conditions. For example, when the speed control pedal is not in the neutral position, as illustrated in FIG. 20, text requesting the user to put the speed control pedal in the neutral position is displayed on the display element 13. For example, when the parking brake is not in the on state, as illustrated in FIG. 21, text requesting the user to put the parking brake in the on state is displayed on the display element 13. The user can put the parking brake in the on state by, for example, operating the parking brake pedal.

When DPF regeneration is not executed when the user operates the DPF regeneration switch 172a, the user may be confused without knowing the reason why DPF regeneration is not executed. In this embodiment, when the work vehicle 200 does not satisfy conditions necessary for execution of DPF regeneration, the ECU 610a causes the display element 13 to display information relating to operations to be performed by the user for the work vehicle 200 to satisfy the conditions. By viewing the display content of the display element 13, the user can know operations necessary to execute DPF regeneration.

In the processing of step S102 illustrated in FIG. 19, when it is determined that the work vehicle 200 satisfies all conditions necessary for execution of DPF regeneration, the ECU 610a performs control to cause the work vehicle 200 to execute DPF regeneration (step S105). Also, in this case, since display of information 151 relating to operations to be performed by the user is unnecessary, the display of information 151 on the display element 13 is not performed. The ECU 610a can reduce particulate matter in the DPF 212a by, for example, performing control to make the exhaust gas of the engine 202 high temperature or performing control to mix fuel with the exhaust gas. During execution of DPF regeneration, information indicating that DPF regeneration is being executed may be displayed on the display element 13.

When it is determined that the work vehicle 200 has come to satisfy all conditions necessary for execution of DPF regeneration as a result of the user performing necessary operations based on the information 151 displayed in the processing of step S103, the ECU 610a ends the display of information 151 and performs control to cause the work vehicle 200 to execute DPF regeneration (steps S104, S105). In this case, information requesting the user to operate the DPF regeneration switch 172a again may be displayed on the display element 13, and when the user operates the DPF regeneration switch 172a again, control to cause the work vehicle 200 to execute DPF regeneration may be performed.

Next, an example of display operations when there are multiple types of operations to be performed by the user to satisfy conditions necessary for execution of DPF regeneration will be described. When there are multiple types of operations to be performed by the user for the work vehicle 200 to satisfy the conditions, the ECU 610a sequentially switches the contents of the multiple types of operations and causes the display element 13 to display them.

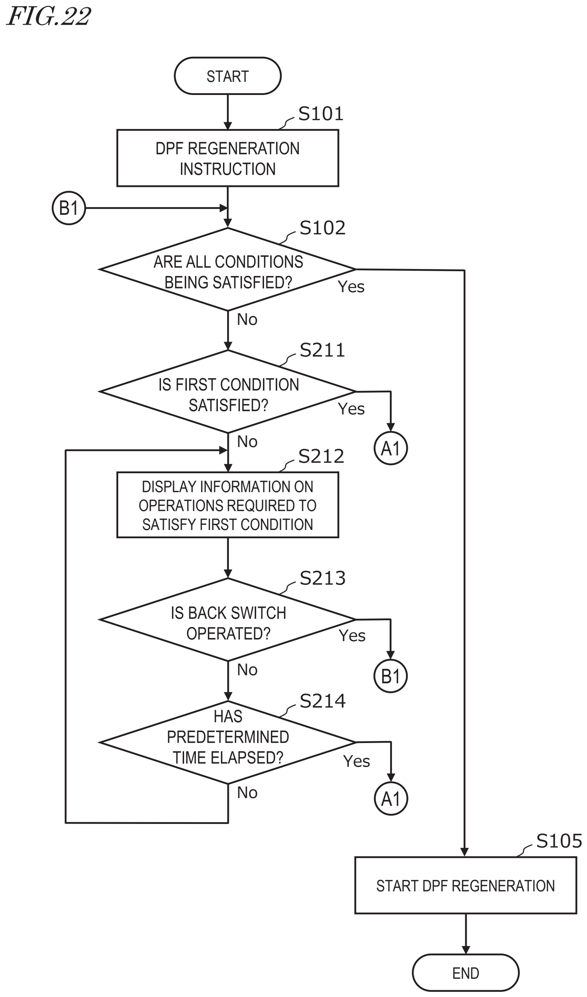

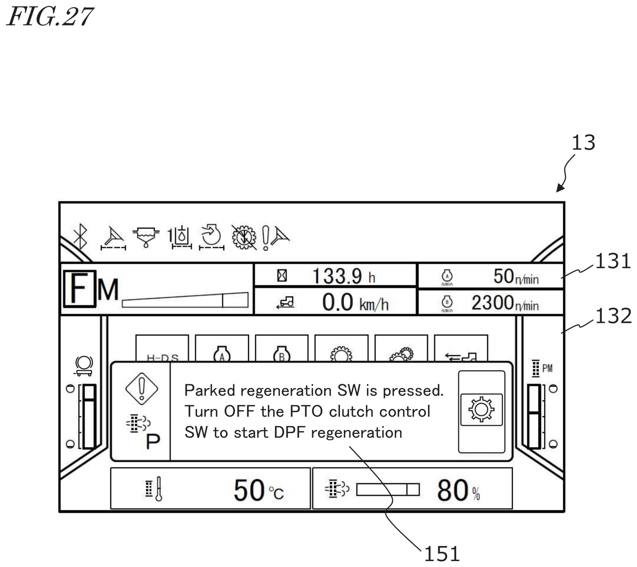

FIGS. 22, 23, 24, 25, and 26 are flowcharts illustrating examples of operations relating to DPF regeneration. FIGS. 27, 28, and 29 are diagrams illustrating examples of the display element 13 displaying information 151 relating to operations to be performed by the user for the work vehicle 200 to satisfy conditions. Here, as an example, operations for determining whether five conditions necessary for execution of DPF regeneration are satisfied and, when there are conditions that are not satisfied, displaying information relating to operations to be performed by the user to satisfy those conditions will be described.

The processing of steps S101, S102, and S105 illustrated in FIG. 22 is the same as the processing of steps S101, S102, and S105 illustrated in FIG. 19. In the processing illustrated in FIG. 22, when it is determined in step S102 that the work vehicle 200 does not satisfy at least one of the conditions necessary for execution of DPF regeneration, the ECU 610a proceeds to the processing of step S211.

In step S211, the ECU 610a determines whether the work vehicle 200 satisfies a first condition. The first condition is, for example, the condition that "the speed control pedal is in the neutral position".

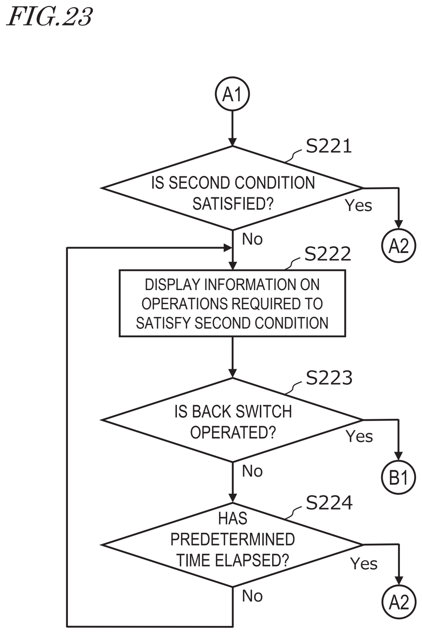

When it is determined that the work vehicle 200 satisfies the first condition, the ECU 610a proceeds to the processing of step S221 in FIG. 23. When it is determined that the work vehicle 200 does not satisfy the first condition, the ECU 610a causes the display element 13 to display information 151 relating to operations to be performed by the user for the work vehicle 200 to satisfy the first condition (step S212). For example, as illustrated in FIG. 20, the ECU 610a causes the display element 13 to display text requesting the user to put the speed control pedal in the neutral position. As illustrated in FIG. 22, next, the ECU 610a determines whether the user has operated the back switch 172b (step S213). The user may operate the back switch 172b to end the display of information 151 after performing necessary operations. When the user has operated the back switch 172b, the process returns to step S102 in FIG. 22.

When a predetermined time has elapsed since starting the display of information 151 relating to operations to be performed by the user for the work vehicle 200 to satisfy the first condition, the ECU 610a proceeds to the processing of step S221 in FIG. 23 (step S214). The predetermined time is, for example, 5-15 seconds, but is not limited thereto. By displaying information 151 for, for example, 5-15 seconds, time for the user to read and understand the information 151 can be provided.

In the processing of step S221 in FIG. 23, the ECU 610a determines whether the work vehicle 200 satisfies a second condition. The second condition is, for example, the condition that "the parking brake is in the on state".

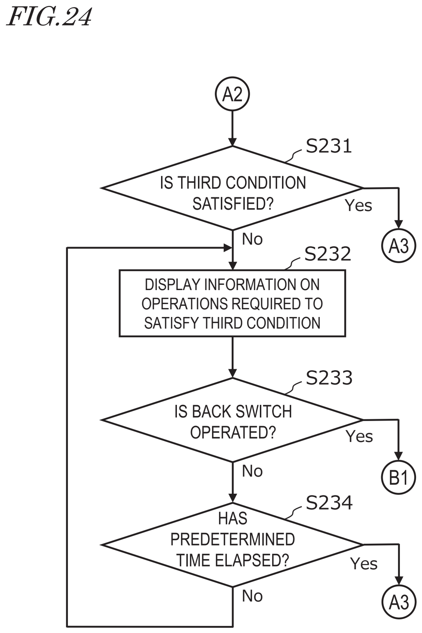

When it is determined that the work vehicle 200 satisfies the second condition, the ECU 610a proceeds to the processing of step S231 in FIG. 24. When it is determined that the work vehicle 200 does not satisfy the second condition, the ECU 610a causes the display element 13 to display information 151 relating to operations to be performed by the user for the work vehicle 200 to satisfy the second condition (step S222). For example, as illustrated in FIG. 21, the ECU 610a causes the display element 13 to display text requesting the user to put the parking brake in the on state.

When the user has operated the back switch 172b, the process returns to step S102 in FIG. 22 (step S223). When a predetermined time has elapsed since starting the display of information 151 relating to operations to be performed by the user for the work vehicle 200 to satisfy the second condition, the ECU 610a proceeds to the processing of step S231 in FIG. 24 (step S224).

In the processing of step S231 in FIG. 24, the ECU 610a determines whether the work vehicle 200 satisfies a third condition. The third condition is, for example, the condition that "the operation of the PTO shaft is in the off state".

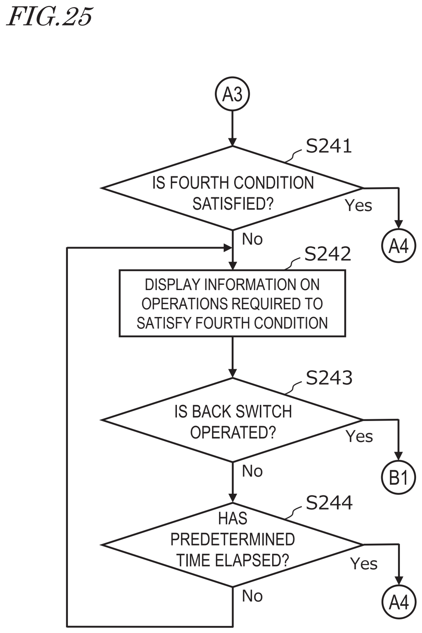

When it is determined that the work vehicle 200 satisfies the third condition, the ECU 610a proceeds to the processing of step S241 in FIG. 25. When it is determined that the work vehicle 200 does not satisfy the third condition, the ECU 610a causes the display element 13 to display information 151 relating to operations to be performed by the user for the work vehicle 200 to satisfy the third condition (step S232). For example, as illustrated in FIG. 27, the ECU 610a causes the display element 13 to display text requesting the user to turn off the PTO clutch control switch.

When the user has operated the back switch 172b, the process returns to step S102 in FIG. 22 (step S233). When a predetermined time has elapsed since starting the display of information 151 relating to operations to be performed by the user for the work vehicle 200 to satisfy the third condition, the ECU 610a proceeds to the processing of step S241 in FIG. 25 (step S234).

In the processing of step S241 in FIG. 25, the ECU 610a determines whether the work vehicle 200 satisfies a fourth condition. The fourth condition is, for example, the condition that "the throttle lever is in the low idling position".

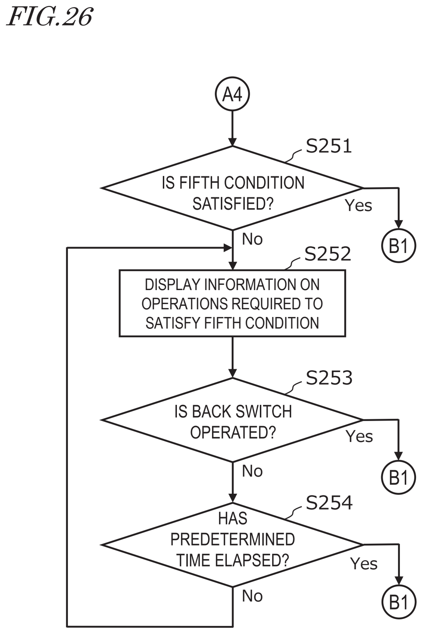

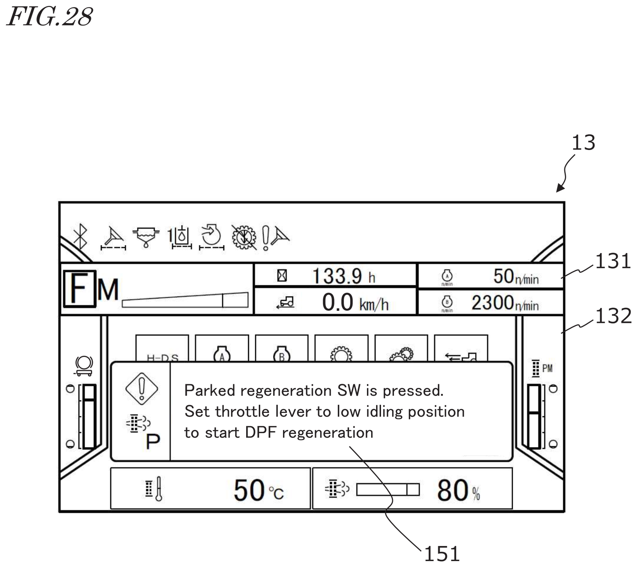

When it is determined that the work vehicle 200 satisfies the fourth condition, the ECU 610a proceeds to the processing of step S251 in FIG. 26. When it is determined that the work vehicle 200 does not satisfy the fourth condition, the ECU 610a causes the display element 13 to display information 151 relating to operations to be performed by the user for the work vehicle 200 to satisfy the fourth condition (step S242). For example, as illustrated in FIG. 28, the ECU 610a causes the display element 13 to display text requesting the user to put the throttle lever in the low idling position.

When the user has operated the back switch 172b, the process returns to step S102 in FIG. 22 (step S243). When a predetermined time has elapsed since starting the display of information 151 relating to operations to be performed by the user for the work vehicle 200 to satisfy the fourth condition, the ECU 610a proceeds to the processing of step S251 in FIG. 26 (step S244).

In the processing of step S251 in FIG. 26, the ECU 610a determines whether the work vehicle 200 satisfies a fifth condition. The fifth condition is, for example, the condition that "the DPF regeneration prohibition switch is in the off state". The work vehicle 200 is provided with a DPF regeneration prohibition switch, and when the DPF regeneration prohibition switch is in the on state, DPF regeneration is not executed.

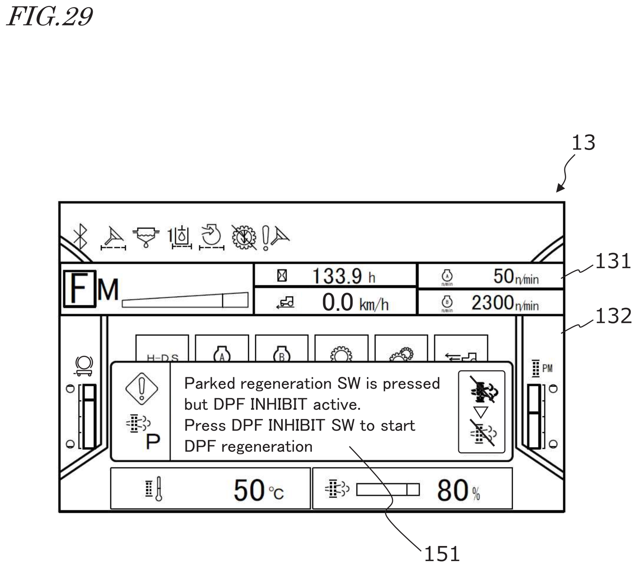

When it is determined that the work vehicle 200 satisfies the fifth condition, the ECU 610a returns to the processing of step S102 in FIG. 22. When it is determined that the work vehicle 200 does not satisfy the fifth condition, the ECU 610a causes the display element 13 to display information 151 relating to operations to be performed by the user for the work vehicle 200 to satisfy the fifth condition (step S252). For example, as illustrated in FIG. 29, the ECU 610a causes the display element 13 to display text requesting the user to press the DPF regeneration prohibition switch to put it in the off state.

When the user has operated the back switch 172b, the process returns to step S102 in FIG. 22 (step S253). When a predetermined time has elapsed since starting the display of information 151 relating to operations to be performed by the user for the work vehicle 200 to satisfy the fifth condition, the ECU 610a returns to the processing of step S102 in FIG. 22 (step S254).

As described above, when there are multiple types of operations to be performed by the user to satisfy conditions necessary for execution of DPF regeneration, the ECU 610a sequentially switches the contents of the multiple types of operations and causes the display element 13 to display them. By the user sequentially performing necessary operations based on the display information, the work vehicle 200 can satisfy the conditions.

The speed control pedal, parking brake pedal, PTO clutch control switch, and throttle lever described above are operation devices that receive operations from the user relating to travel and agricultural work of the work vehicle 200. The ECU 610a causes the display element 13 to display information relating to operations to be performed by the user on such operation devices with higher priority than information relating to operations to be performed by the user on devices different from the operation devices (for example, the DPF regeneration prohibition switch). This allows smooth transition to execution of DPF regeneration.

In the processing illustrated in FIGS. 22-26, information 151 relating to operations already executed by the user among the multiple types of operations to be performed by the user is not displayed. By sequentially displaying only operations that the user has not yet executed, the user can smoothly execute the necessary operations.

The various processing executed by the ECU 610a described above may be performed by the control device 400, or may be performed by the ECU 610a and the control device 400 in cooperation.

Information display systems in the above embodiments can also be retrofitted to work vehicles that do not have these functions. Such systems may be manufactured and sold independently of work vehicles. Computer programs used in such systems may also be manufactured and sold independently of work vehicles. Computer programs may be provided, for example, stored on computer-readable non-transitory storage media. Computer programs may also be provided by download via telecommunication lines (e.g., the Internet).

### INDUSTRIAL APPLICABILITY

The technologies of the present disclosure are widely applicable to various types of work vehicles used in smart agriculture.

### REFERENCE SIGNS LIST

10: meter portion, 11: first analog meter, 12: second analog meter, 13: display element, 14T: indicator region, 14L: indicator region, 14R: indicator region, 17: raised scale, 20: wall surface portion, 30: transparent cover, 30A: front surface section of transparent cover, 30B: side surface section of transparent cover, 40: arc-shaped indicator, 50: facing plate, 100: meter panel unit, 400: control device, 500: information display system

## Claims

1. An information display system for a work vehicle, comprising:
a meter panel unit including a display element; and
a control device configured to control the meter panel unit,
wherein when a user operates a DPF (Diesel Particulate Filter) regeneration switch that receives an instruction to execute DPF regeneration of the work vehicle, if the work vehicle does not satisfy conditions necessary for execution of the DPF regeneration, the control device causes the display element to display information relating to operations to be performed by the user for the work vehicle to satisfy the conditions.

2. The information display system of claim 1, wherein the information relating to the operations to be performed by the user displayed by the display element includes text indicating the operations to be performed by the user.

3. The information display system of claim 1 or 2, wherein when there are multiple types of operations to be performed by the user for the work vehicle to satisfy the conditions, the control device sequentially switches contents of the multiple types of operations to be performed by the user and causes the display element to display the contents.

4. The information display system of claim 3, wherein the control device causes the display element to display information relating to operations to be performed by the user on an operation device that receives operations from the user relating to travel of the work vehicle with higher priority than information relating to operations to be performed by the user on a device different from the operation device.

5. The information display system of claim 3, wherein the control device does not cause the display element to display information relating to operations already executed by the user among the multiple types of operations to be performed by the user.

6. The information display system of claim 1 or 2, wherein when the work vehicle comes to satisfy the conditions, the control device does not cause the display element to display the information relating to the operations to be performed by the user.

7. The information display system of claim 1, wherein when the user operates the DPF regeneration switch and the work vehicle satisfies the conditions, the control device does not cause the display element to display the information relating to the operations to be performed by the user.

8. A work vehicle comprising the information display system of claim 1 or 2.

9. The work vehicle of claim 8, wherein when the user operates the DPF regeneration switch and the work vehicle satisfies the conditions necessary for execution of the DPF regeneration, the control device causes the work vehicle to execute DPF regeneration.

10. The work vehicle of claim 8, wherein when the user operates the DPF regeneration switch and the work vehicle does not satisfy the conditions necessary for execution of the DPF regeneration, the control device does not cause the work vehicle to execute DPF regeneration.

11. The work vehicle of claim 10, wherein when the work vehicle comes to satisfy the conditions, the control device causes the work vehicle to execute DPF regeneration.

12. The work vehicle of claim 8, wherein the work vehicle is a tractor.

13. A computer-implemented display method for causing a display element of a meter panel unit for a work vehicle to display an image, comprising:
when a user operates a DPF (Diesel Particulate Filter) regeneration switch that receives an instruction to execute DPF regeneration of the work vehicle, if the work vehicle does not satisfy conditions necessary for execution of the DPF regeneration, causing the display element to display information relating to operations to be performed by the user for the work vehicle to satisfy the conditions.

14. A computer program executed by a computer to cause a display element of a meter panel unit for a work vehicle to display an image, the computer program causing the computer to perform:
when a user operates a DPF (Diesel Particulate Filter) regeneration switch that receives an instruction to execute DPF regeneration of the work vehicle, if the work vehicle does not satisfy conditions necessary for execution of the DPF regeneration, causing the display element to display information relating to operations to be performed by the user for the work vehicle to satisfy the conditions.
